(19) Europäisches Patentamt
European Patent Office
Office européen des brevets

(11) **EP 3 964 875 A1**

(12) **EUROPEAN PATENT APPLICATION**
published in accordance with Art. 153(4) EPC

(43) Date of publication:
**09.03.2022 Bulletin 2022/10**

(21) Application number: **20833450.8**

(22) Date of filing: **24.06.2020**

(51) International Patent Classification (IPC):
**G02B 13/00** (2006.01)     **G02B 9/62** (2006.01)

(52) Cooperative Patent Classification (CPC):
**G02B 1/00; G02B 9/62; G02B 13/00; G02B 13/02; G02B 13/18**

(86) International application number:
**PCT/CN2020/098175**

(87) International publication number:
**WO 2020/259607 (30.12.2020 Gazette 2020/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.06.2019 CN 201910572891**
**27.09.2019 CN 201910940154**

(71) Applicant: **Huawei Technologies Co., Ltd.**
**Shenzhen, Guangdong 518129 (CN)**

(72) Inventors:
• **YE, Haishui**
**Shenzhen, Guangdong 518129 (CN)**
• **LU, Jianlong**
**Shenzhen, Guangdong 518129 (CN)**
• **CHIANG, Yita**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **OPTICAL LENS GROUP, CAMERA AND TERMINAL DEVICE**

(57)     Disclosed are an optical lens assembly, a camera, and a terminal device. The optical lens assembly includes a plurality of lenses successively arranged from an object side to an image side in a direction along an optical axis, where at least one of the lenses is made of a first material, and a coefficient of a relative refractive index to a temperature drift of the first material is less than a coefficient of a relative refractive index to a temperature drift of a plastic material. The first three lenses in the plurality of lenses in a direction from the object side to the image side are successively a first lens (L1), a second lens (L2), and a third lens (L3), the first lens (L1) has a positive focal power, the second lens (L2) has a negative focal power, the third lens (L3) has a negative focal power, an effective focal length of the optical lens assembly is f, a distance from an object side surface (SI) of the first lens (L1) to an imaging plane (S15) on the optical axis is TTL, and TTL/f ≤ 1. A problem of a temperature drift effect is resolved by defining a material of a lens of the optical lens assembly and focal powers of the first three lenses and combining focal powers of remaining lenses, thereby improving an imaging effect.

FIG. 2a

## Description

This application claims priority to Chinese Patent Application No. 201910572891.0, filed with the China National Intellectual Property Administration on June 27, 2019, and entitled "LONG-FOCUS LENS ASSEMBLY, IMAGE CAPTURING APPARATUS, AND PORTABLE TERMINAL DEVICE IN PHOTOGRAPHIC OPTICAL SYSTEM", and claims priority to Chinese Patent Application No. 201910940154.1, filed with the China National Intellectual Property Administration on September 27, 2019, and entitled "OPTICAL LENS ASSEMBLY, CAMERA, AND TERMINAL DEVICE", which are incorporated herein by reference in their entireties.

## TECHNICAL FIELD

The present invention belongs to the field of optical imaging technologies, and in particular, relates to an optical lens assembly and a terminal device in a photographic optical system.

## BACKGROUND

A portable terminal device is increasingly widely applied, and a camera is a typical component of the terminal device. With continuous development of portable devices such as a mobile phone, application of cameras is increasingly diversified. In a combined multi-camera zoom system, a camera of a terminal device develops towards a long-focus lens assembly.

Generally, a long-focus photographic lens assembly of a terminal device uses a structure design of four to six plastic lenses, and a focal length and a back focal length of the lens assembly change with temperature, which is referred to as a temperature drift effect. With an increase in the focal length of the lens assembly, the temperature drift effect of the lens assembly is more obvious. The problem of the temperature drift effect severely affects user experience.

How to resolve the temperature drift effect of the long-focus lens assembly is a research direction of the industry.

## SUMMARY

This application provides an optical lens assembly, a camera, and a terminal device. The optical lens assembly is a long-focus lens, and a problem of a temperature drift effect is resolved by defining a material of a lens and focal powers of the first three lenses near an object side and combining focal powers of remaining lenses, thereby improving an imaging effect and providing good user experience.

According to a first aspect, an embodiment of this application provides an optical lens assembly, including a plurality of lenses successively arranged from an object side to an image side in a direction along an optical axis, where a quantity of lenses may be four, five, six, seven, or the like. At least one of the plurality of lenses is made of a first material, a coefficient of a relative refractive index to a temperature drift of the first material is less than a coefficient of a relative refractive index to a temperature drift of a plastic material, the first material may be a glass material, and other lenses are made of plastic materials. The first three lenses in the plurality of lenses in a direction from the object side to the image side are successively a first lens, a second lens, and a third lens, the first lens has a positive focal power, the second lens has a negative focal power, the third lens has a negative focal power, an effective focal length of the optical lens assembly is f, a distance from an object side surface of the first lens to an imaging plane on the optical axis is TTL, and $TTL/f \leq 1$. The distance from the object side surface of the first lens to the imaging plane on the optical axis, that is, TTL, specifically refers to a distance between an intersecting point of the object side surface of the first lens and the optical axis and an intersecting point of the imaging plane and the optical axis. An electronic photosensitive element is disposed on the imaging plane, and is specifically a sensing chip of a camera in a terminal device. Specifically, an object side of the first lens near the optical axis is a convex surface, so that a good field of view of the optical lens assembly is obtained. In this application, the material of the at least one lens is defined as the first material whose coefficient of a relative refractive index to a temperature drift is less than the coefficient of the relative refractive index to the temperature drift of the plastic material, and focal powers of the first lens, the second lens, the third lens, and remaining lenses are defined. In this way, a temperature drift effect of the optical lens assembly can be suppressed and a comprehensive chromatic aberration problem can be resolved. In addition, an imaging effect of the optical lens assembly can be ensured even in a high temperature environment, and a total length of the optical lens assembly can be relatively short.

In a possible implementation, the coefficient of the relative refractive index to the temperature drift of the first material is $\beta$ (representing a temperature-dependent change coefficient of a refractive index of a material in a medium such as air), and $-9\times10^{-5} \leq \beta \leq 9\times10^{-5}$. A focal length of the first lens is f1, and $0 \leq f1/f \leq 3$. In this implementation, a range of the coefficient of the relative refractive index to the temperature drift of the first material is defined, and focal powers are allocated, so that a relatively small system temperature drift coefficient can be obtained for the optical lens assembly. Specifically, the coefficient of the relative refractive index to the temperature drift of the first material is $\beta$, and $-9 \times 10^{-5} \leq \beta \leq 0$. In other words, the coefficient of the relative refractive index to the temperature drift of the first material is a negative value, and may be an opposite number of the coefficient of the relative refractive index to the temperature drift of the plastic material, for example, a glass material. A coefficient of a relative refractive index to a temperature drift of a lens of the plastic material is a positive value, and a coefficient of a relative refractive index to a temperature drift of the lens of the plastic material can be partially offset by setting a negative coefficient of a relative refractive index to a temperature drift. Overall, the relatively small system temperature drift coefficient can be obtained for the optical lens assembly.

In a possible implementation, a dispersion coefficient (Abbe number) of the lens of the first material is V, and $15 \leq V \leq 100$. In this implementation, a chromatic aberration of the optical lens assembly can be corrected through proper allocation of a focal power and selection of a dispersion coefficient, to obtain an imaging effect with relatively high definition. The dispersion coefficient is an important index to measure imaging definition of a lens, and is usually expressed by an Abbe number (dispersion coefficient). If the Abbe number is larger, dispersion is smaller. On the contrary, if the Abbe number is smaller, dispersion is larger, and imaging definition is lower. That is, the Abbe number represents a separation effect of a material on a light source (a lightwave spectrum). A beam of parallel white light focuses on one point after passing through an ideal lens, but because a material exhibits different refractive indexes for different lightwave lengths, a separation effect on light is produced, and the light focuses on a plurality of points (forming a "rainbow" phenomenon). Generally, there is such a rule: if a refractive index of a material is larger, dispersion is greater, namely, an Abbe number is smaller.

In a possible implementation, a temperature drift coefficient of the optical lens assembly is $\Delta f/\Delta°C$, and $-2.6$ $\mu m/°C \leq \Delta f/\Delta°C \leq 2.6 \mu m/°C$. Therefore, a temperature drift effect of the optical lens assembly can be suppressed. In this implementation, a range of the temperature drift coefficient is defined, so that the optical lens assembly can meet a use requirement. To further optimize a design architecture of the optical lens assembly, the range of the temperature drift coefficient may be specifically $-1 \mu m/°C \leq \Delta f/\Delta°C \leq 1 \mu m/°C$. If an absolute value of the temperature drift coefficient $\Delta f/\Delta°C$ of the optical lens assembly is smaller, an imaging effect is better.

In a possible implementation, both an object side surface and an image side surface of the second lens are spherical surfaces, a curvature radius of the object side surface of the second lens is R21, a curvature radius of the image side surface of the second lens is R22, and |f/R21| + |f/R22| < 10, to facilitate correction of a comprehensive aberration of the optical lens assembly. When |f/R21| + |f/R22| is greater than or equal to 10, it is unfavorable to the correction of the comprehensive aberration of the optical lens assembly, thereby affecting an imaging effect.

In a possible implementation, thicknesses are allocated based on density of lens materials, so that weights of the front and rear parts of the optical lens assembly are even, and a center of gravity is located near a center of the optical lens assembly, thereby ensuring a stable posture of the optical lens assembly. The center of gravity of the optical lens assembly is located at the central position of the optical lens assembly, and the central position of the optical lens assembly is a midpoint position between an intersecting point of an object side of the first lens and the optical axis and an intersecting point of an image side of the last lens and the optical axis. In this application, the central position is not limited to the midpoint position, and may be within a range near the midpoint position, provided that weights of the front and rear parts of a camera are even when all lenses are assembled in a lens barrel of the camera. In the plurality of lenses in this application, the at least one of the lenses is made of the first material, for example, glass, and remaining lenses are made of a plastic material. Because a lens of the first material is heavier than other lenses, a center of gravity is prone to deviation. During use of a camera, when the camera is driven by a voice coil motor to implement stabilization, stabilization cannot be easily implemented because the center of gravity is deviated. However, in this application, the position of the center of gravity is defined, so that the posture of the optical lens assembly is stable. In this way, the stabilization problem of the camera is more easily resolved during use.

In a possible implementation, the plurality of lenses are six lenses: the first lens, the second lens, the third lens, a fourth lens, a fifth lens, and a sixth lens successively arranged in a direction from the object side to the image side, the optical lens assembly further includes a vignetting stop, and the vignetting stop is disposed on an object side of the first lens and/or disposed on an image side of the sixth lens. The vignetting stop can intercept imaging light with large aberration (in other words, intercept an off-axis beam), thereby improving imaging quality and reducing an outer diameter of the optical lens assembly.In a possible implementation, the plurality of lenses are six lenses: the first lens, the second lens, the third lens, a fourth lens, a fifth lens, and a sixth lens successively arranged in a direction from the object side to the image side, the fourth lens is made of the first material, and at least one surface of the fourth lens is a spherical surface.

In a possible implementation, a spherical radius of the spherical surface of the fourth lens is R, and $-100$ mm $< R < 100$ mm. In this implementation, the fourth lens is made of the first material. Taking a glass material as an example, manufacturing and molding of the fourth lens are more difficult than those of a lens of a plastic material, and it is difficult to ensure a surface shape of the lens when a spherical radius is excessively large. In this application, the spherical radius is defined to be between $-100$ mm and $100$ mm, so that molding difficulty of the fourth lens (which is made of the first material such as a glass material) is reduced, and manufacturability of a glass lens is ensured.

In a possible implementation, a spacing between the fourth lens and the fifth lens is SP4, a spacing between an object-side vertex position of the first lens and an image-side vertex position of the sixth lens is LT, and SP4/LT $\leq$ 0.5. In this implementation, the spacing between the fourth lens and the fifth lens is defined, to facilitate technology stability of the optical lens assembly. A spacing between adjacent lenses is a distance between adjacent optical surfaces along the direction of the optical axis. Specifically, when a spacing between lenses is large, assembly precision is not easily ensured, and assembly is quite difficult, thereby affecting a yield rate of the optical lens assembly. In this implementation, a ratio of the spacing to LT is ensured to be less than 0.5, so that the spacing is within a proper range, assembly difficulty is reduced, and the yield rate is increased.

In a possible implementation, a focal length of the fourth lens is f4, and 0.1 $\leq$ f4/f $\leq$ 5. Because a lens of the first material occupies a major focal power in the optical lens assembly provided in this application, and has greatest impact on optical performance, in this implementation, a range of a ratio of the focal length of the fourth lens to an effective focal length of the optical lens assembly is defined, to adjust optical performance of the optical lens assembly.

In a possible implementation, the plurality of lenses are six lenses: the first lens, the second lens, the third lens, a fourth lens, a fifth lens, and a sixth lens successively arranged in a direction from the object side to the image side, the fifth lens is made of the first material, and at least one surface of the fifth lens is a spherical surface.

In a possible implementation, a combined focal length of the fourth lens and the fifth lens is f45, and 0.27 $\leq$ f45/f $\leq$ 0.9. Because a lens of the first material occupies a major focal power in the optical lens assembly provided in this application, and has greatest impact on optical performance, in this implementation, a range of a ratio of the combined focal length of the fourth lens and the fifth lens to an effective focal length of the optical lens assembly is defined, to adjust optical performance of the optical lens assembly.

In a possible implementation, a spacing between the fifth lens and the sixth lens is SP5, a spacing between an object-side vertex position of the first lens and an image-side vertex position of the sixth lens is LT, and SP5/LT $\leq$ 0.2. In this implementation, the spacing between the fifth lens and the sixth lens is defined, to achieve a relatively good assembly technology.In a possible implementation, the plurality of lenses are six lenses: the first lens, the second lens, the third lens, a fourth lens, a fifth lens, and a sixth lens successively arranged in a direction from the object side to the image side, the sixth lens is made of the first material, and at least one surface of the sixth lens is a spherical surface. A spherical radius of the spherical surface of the sixth lens is R, and -100 mm < R < 100 mm. In this implementation, molding difficulty of the sixth lens (which is made of the first material such as a glass material) is reduced, and manufacturability of a glass lens is ensured.

In a possible implementation, a combined focal length of the first lens and the second lens is f12, and 0.27 $\leq$ f12/f $\leq$ 0.9.

In a possible implementation, a spacing between the third lens and the fourth lens is SP3, a spacing between an object-side vertex position of the first lens and an image-side vertex position of the sixth lens is LT, and SP3/LT $\leq$ 0.2, so that difficulty of assembling a lens can be reduced. In this implementation, the spacing between the third lens and the fourth lens is defined, to achieve a relatively good assembly technology.

In a possible implementation, the first lens is made of the first material, and at least one surface of the first lens is a spherical surface. A spherical radius of the spherical surface of the first lens is R, and -100 mm < R < 100 mm. In this implementation, molding difficulty of the first lens (which is made of the first material such as a glass material) is reduced, and manufacturability of a glass lens is ensured.

In a possible implementation, a combined focal length of the first lens and the second lens is f12, and 0.27 $\leq$ f12/f $\leq$ 0.9.

In a possible implementation, a spacing between the second lens and the third lens is SP2, a spacing between an object-side vertex position of the first lens and an image-side vertex position of the sixth lens is LT, and SP2/LT $\leq$ 0.2. In this implementation, the spacing between the second lens and the third lens is defined, to achieve a relatively good assembly technology.

In a possible implementation, the optical lens assembly further includes an infrared filter element located between the plurality of lenses and an imaging plane. The infrared filter element can effectively improve color cast around an image.

In a possible implementation, the object side surface of the first lens near the optical axis is a convex surface, to improve an object-side light convergence capability. According to a second aspect, this application provides a camera, including a lens barrel and the optical lens assembly according to any one of the foregoing implementations, where the optical lens assembly is mounted in the lens barrel.

According to a third aspect, this application provides a terminal device, including the camera.

In this application, the material of the at least one of the lenses in the optical lens assembly is selected as the first material whose coefficient of a relative refractive index to a temperature drift is less than the coefficient of the relative refractive index to the temperature drift of the plastic material, so that an optical effect of the optical lens assembly can be suppressed. Therefore, parameters such as a focal length and an MTF (Modulation Transfer Function (modulation transfer function)) of the optical lens assembly are insensitive to temperature, and a stroke margin used by a voice coil motor to compensate for a temperature drift effect of the lens assembly is reduced or a temperature drift effect compensation algorithm of a photographing system is canceled, thereby improving user experience and implementing excellent optical quality.

## BRIEF DESCRIPTION OF DRAWINGS

To describe the technical solutions in the embodiments of the present invention or in the background more clearly, the following briefly describes the accompanying drawings for describing the embodiments of the present invention or the background.

FIG. 1 is a schematic diagram of application of an optical lens assembly in a terminal device according to this application;
FIG. 2a is a schematic diagram of an optical lens assembly according to Embodiment 1 of this application;
FIG. 2b is an axial spherical aberration curve of an optical system according to Embodiment 1;
FIG. 2c is an astigmatic field curve of the optical system according to Embodiment 1;
FIG. 2d is a distortion curve of the optical system according to Embodiment 1;
FIG. 2e is a longitudinal chromatic aberration curve of the optical system according to Embodiment 1;
FIG. 3a is a schematic diagram of an optical lens assembly according to Embodiment 2 of this application;
FIG. 3b is an axial spherical aberration curve of an optical system according to Embodiment 2;
FIG. 3c is an astigmatic field curve of the optical system according to Embodiment 2;
FIG. 3d is a distortion curve of the optical system according to Embodiment 2;
FIG. 3e is a longitudinal chromatic aberration curve of the optical system according to Embodiment 2;
FIG. 4a is a schematic diagram of an optical lens assembly according to Embodiment 3 of this application;
FIG. 4b is an axial spherical aberration curve of an optical system according to Embodiment 3;
FIG. 4c is an astigmatic field curve of the optical system according to Embodiment 3;
FIG. 4d is a distortion curve of the optical system according to Embodiment 3;
FIG. 4e is a longitudinal chromatic aberration curve of the optical system according to Embodiment 3;
FIG. 5a is a schematic diagram of an optical lens assembly according to Embodiment 4 of this application;
FIG. 5b is an axial spherical aberration curve of an optical system according to Embodiment 4;
FIG. 5c is an astigmatic field curve of the optical system according to Embodiment 4;
FIG. 5d is a distortion curve of the optical system according to Embodiment 4;
FIG. 5e is a longitudinal chromatic aberration curve of the optical system according to Embodiment 4;
FIG. 6a is a schematic diagram of an optical lens assembly according to Embodiment 5 of this application;
FIG. 6b is an axial spherical aberration curve of an optical system according to Embodiment 5;
FIG. 6c is an astigmatic field curve of the optical system according to Embodiment 5;
FIG. 6d is a distortion curve of the optical system according to Embodiment 5;
FIG. 6e is a longitudinal chromatic aberration curve of the optical system according to Embodiment 5;
FIG. 7a is a schematic diagram of an optical lens assembly according to Embodiment 6 of this application;
FIG. 7b is an axial spherical aberration curve of an optical system according to Embodiment 6;
FIG. 7c is an astigmatic field curve of the optical system according to Embodiment 6;
FIG. 7d is a distortion curve of the optical system according to Embodiment 6;
FIG. 7e is a longitudinal chromatic aberration curve of the optical system according to Embodiment 6;
FIG. 8a is a schematic diagram of an optical lens assembly according to Embodiment 7 of this application;
FIG. 8b is an axial spherical aberration curve of an optical system according to Embodiment 7;
FIG. 8c is an astigmatic field curve of the optical system according to Embodiment 7;
FIG. 8d is a distortion curve of the optical system according to Embodiment 7; and
FIG. 8e is a longitudinal chromatic aberration curve of the optical system according to Embodiment 7.

## DESCRIPTION OF EMBODIMENTS

The following describes the embodiments of the present invention with reference to the accompanying drawings in the embodiments of the present invention.

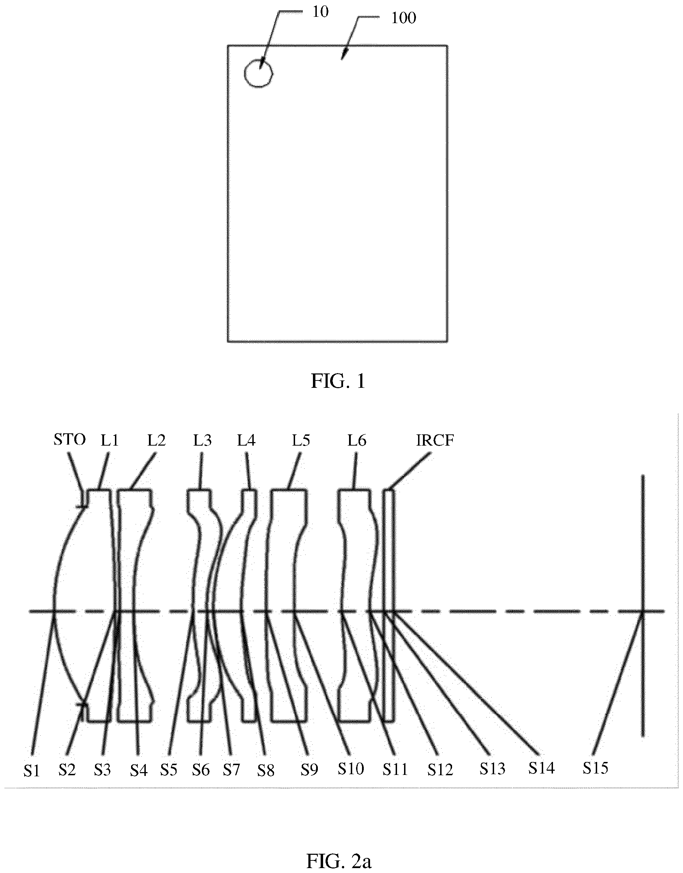

Referring to FIG. 1, an optical lens assembly 10 in this application is applied to a camera in a terminal device 100. The terminal device 100 may be a portable terminal such as a mobile phone or a tablet. The optical lens assembly 10 may be a long-focus lens assembly, and the optical lens assembly 10 is mounted in a lens barrel of the camera. The camera is assembled inside the terminal device 100, and may be a rear-facing camera or a front-facing camera of the terminal device 100, or a telescopic camera that may protrude from a housing of the terminal device 100.

The optical lens assembly provided in this application includes six lenses, and the six lenses are a first lens, a second lens, a third lens, a fourth lens, a fifth lens, and a sixth lens successively distributed from an object side to an image side in a direction along an optical axis. A quantity of lenses is not limited to six, and may be another quantity, for example, five or seven. At least one of the six lenses is made of a first material, and a coefficient of a relative refractive index to a temperature drift of the first material is less than a coefficient of a relative refractive index to a temperature drift of a plastic material. For example, the first material may be a glass material, and a refractive index of the glass material is insensitive to a temperature drift coefficient. Specifically, a coefficient of a relative refractive index to a temperature drift of the glass material is a negative value, the coefficient of the relative refractive index to the temperature drift of the plastic material is a positive value, and the coefficient of the relative refractive index to the temperature drift of the glass material is opposite to the coefficient of the relative refractive index to the temperature drift of the plastic material. The first lens has a positive focal power, the second lens has a negative focal power, the third lens has a negative focal power, a focal length of the optical lens assembly is f, a distance from an object side surface of the first lens to an imaging plane on the optical axis is TTL, and TTL/f ≤ 1. A special material of the at least one of the lenses is selected as the first material and the focal powers of the first three lenses are allocated, so that a temperature effect of the optical lens assembly can be improved. Therefore, parameters such as a focal length and an MTF of the optical lens assembly are insensitive to temperature, and a stroke margin used by a voice coil motor to compensate for the temperature drift effect of the lens assembly is reduced or a temperature drift effect compensation algorithm of the optical lens assembly is canceled, thereby improving user experience.

Specifically, the glass material may be crown glass, flint glass, borosilicate glass, quartz glass, or the like.

Specifically, the first three lenses of the optical lens assembly that are distributed from the object side to the image side (namely, the first lens, the second lens, and the third lens described in this application) are allocated main focal powers of the optical lens assembly. The first lens has a positive focal power, the second lens has a negative focal power, and the third lens has a negative focal power, so that a chromatic aberration of the optical lens assembly can be better corrected, and imaging quality is improved.

In this embodiment of this application, for the first lens, an object side surface of the first lens near the optical axis is a convex surface, an image side surface of the first lens near the optical axis is a convex surface, and both are spherical surfaces. For the second lens, an object side surface of the second lens near the optical axis is a concave surface, an image side surface of the second lens near the optical axis is a concave surface, and both are aspherical surfaces. For the third lens, an object side surface of the third lens near the optical axis is a convex surface, an image side surface of the third lens near the optical axis is a concave surface, and both are aspherical surfaces.

The object side surface of the first lens near the optical axis is a convex surface, to improve an object-side light convergence capability.

A curve equation of an aspherical surface of a lens is defined as follows:

$$z = \frac{cr^2}{1 + \sqrt{1 - (1+k)c^2 r^2}} + \sum_{i=1}^{N} \alpha_i \rho^{2i},$$

where

Z is a vertical distance between a point whose distance from the optical axis is r on the aspherical surface and a tangent plane tangent to an intersecting point on the optical axis of the aspherical surface;
r is a vertical distance between a point on a curve of the aspherical surface and the optical axis; and
C is a curvature; k is a cone coefficient; and $\alpha_i$ is an aspherical surface coefficient of an $i^{th}$ order.

The following describes this application in detail by using seven specific embodiments.

**Embodiment 1**

As shown in FIG. 2a, a dashed line in the middle represents an optical axis, a left side of an optical lens assembly is an object side, and a right side thereof is an image side. In the optical lens assembly provided in this embodiment, an aperture stop STO, a first lens L1, a second lens L2, a third lens L3, a fourth lens L4, a fifth lens L5, a sixth lens L6, and an infrared filter element IRCF are successively arranged from the object side to the image side along the optical axis, and an electronic sensory element may be placed at a position of an image plane S15. In this implementation, the aperture stop STO is placed before the first lens L1, so that a field of view can be enlarged and an outer diameter of the optical lens assembly can be reduced.

The first lens L1 has a positive focal power and is of a glass material. An object side surface S1 of the first lens L1 near the optical axis is a convex surface, an image side surface S2 thereof near the optical axis is a convex surface, and both are spherical surfaces.

The second lens L2 has a negative focal power and is of a resin material (the resin material is also referred to as a plastic material, and the same explanation is given below). An object side surface S3 of the second lens L2 near the optical axis is a concave surface, an image side surface S4 thereof near the optical axis is a concave surface, and both are aspherical surfaces.

The third lens L3 has a negative focal power and is of a resin material. An object side surface S5 of the third lens L3 near the optical axis is a convex surface, an image side surface S6 thereof near the optical axis is a concave surface, and both are aspherical surfaces.

The fourth lens L4 has a positive focal power and is of a resin material. An object side surface S7 of the fourth lens L4 near the optical axis is a convex surface, an image side surface S8 thereof near the optical axis is a concave surface, and both are aspherical surfaces.

The fifth lens L5 has a positive focal power and is of a resin material. An object side surface S9 of the fifth lens L5 near the optical axis is a convex surface, an image side surface S10 thereof near the optical axis is a concave surface, and both are aspherical surfaces.

The sixth lens L6 has a negative focal power and is of a resin material. An object side surface S11 of the sixth lens L6 near the optical axis is a convex surface, an image side surface S12 thereof near the optical axis is a concave surface, and both are aspherical surfaces.

An object side surface S13 and an image side surface S14 of the infrared filter element IRCF are both planar surfaces.

More generally, the resin material may be replaced with other transparent plastic. Generally, a coefficient of a relative refractive index to a temperature drift of plastic is positive. Plastic is a material that can be formed through flow forming in a processing process by using a polymer material (or which is directly polymerized with a monomer in the processing process) as a main component and additives such as a plasticizer, a filler, lubricant, and a coloring agent as auxiliary components. The resin material is one type of plastic.

A distance that is on the optical axis and that is from the object side surface S1 of the first lens L1 to the imaging plane S15 corresponding to an object at infinity is TTL, an effective focal length of the optical lens assembly is f, and TTL/f $\leq$ 0.88. In this way, the TTL can be relatively short, so that a miniaturized design of the optical lens assembly is implemented, and internal space of a terminal device is saved, thereby facilitating thinning development of the terminal device.

In Embodiment 1, a dispersion coefficient (Abbe number) of the first lens L1 is V1, and 15 $\leq$ V1 $\leq$ 100. A chromatic aberration of the optical lens assembly can be corrected through proper allocation of a focal power and selection of a dispersion coefficient. Specifically, the dispersion coefficient of the first lens L1 is greater than dispersion coefficients of the other five lenses, and the dispersion coefficient of the first lens L1 may be greater than 60.

In Embodiment 1, when temperature is changed by $\Delta$°C, a change amount of the effective focal length f of the optical lens assembly is $\Delta$f. $\Delta$f/$\Delta$°C is defined as a temperature drift coefficient of the optical lens assembly, and the temperature drift coefficient meets the following condition: -1 $\mu$m/°C $\leq$ $\Delta$f/$\Delta$°C $\leq$ 1 $\mu$m/°C, so that a temperature drift effect of the optical lens assembly can be improved.

A coefficient $\beta$ of a relative refractive index to a temperature drift is defined as (dn/dT)rel (n is a refractive index and T is temperature) and represents a temperature-dependent change coefficient of a refractive index of a material in a medium such as air. A coefficient $\beta$1 of a relative refractive index to a temperature drift of the first lens L1 in Embodiment 1 meets: -9×10-5 $\leq$ $\beta$1 $\leq$ 9x10-5, a focal length of the first lens L1 is f1, the effective focal length of the optical lens assembly is f, and f1/f = 0.39 meets the condition: 0 $\leq$ f1/f $\leq$ 3. The temperature drift coefficient of the optical lens assembly can be reduced by using a material with a low coefficient of a refractive index to a temperature drift and through proper allocation of a focal power.

In Embodiment 1, a spacing between the second lens L2 and the third lens L3 is SP2 (that is, a distance between the image side surface S4 of the second lens L3 and the object side surface S5 of the third lens L3 in the direction along the optical axis), a spacing between an object-side vertex position of the first lens L1 and an image-side vertex position of the sixth lens L6 is LT, and SP2/LT $\leq$ 0.2, so that implementation difficulty of assembling an optical lens is reduced. Specifically, when a spacing between lenses is large, assembly precision is not easily ensured, and assembly is quite difficult, thereby affecting a yield rate of the optical lens assembly. In this implementation, a ratio of the spacing SP2 between the second lens L2 and the third lens L3 to LT is ensured to be less than or equal to 0.2, so that the spacing between the second lens L2 and the third lens L3 is within a proper range, thereby reducing assembly difficulty and increasing the yield rate.

The object-side vertex position of the lens described in this application is a position of an object side surface of the lens on the optical axis, and the image-side vertex position is a position of an image side surface of the lens on the optical axis. The same explanation is also applied to other embodiments.

As an extension of Embodiment 1, a vignetting stop ST1 (not shown) may be disposed in front of the first lens L1 (namely, the object side), and a vignetting stop ST2 (not shown) may be disposed at rear of the sixth lens L6 (namely, the image side), so that a diameter of the optical lens assembly can be effectively reduced.

In Embodiment 1, the effective focal length of the optical lens assembly is f, a curvature radius of the object side surface S3 of the second lens L2 is R21, a curvature radius of the image side surface S4 of the second lens L2 is R22, and |f/R21| + |f/R22| = 2.19, thereby facilitating correction of a comprehensive aberration of the optical lens assembly. In this way, a longitudinal chromatic aberration of the optical lens assembly is less than 1.5 $\mu$m, an axial chromatic aberration thereof is less than 10 $\mu$m, and a distortion thereof is less than 1%.

Table 1a is a table of characteristics of an optical system in this embodiment. A curvature radius and a thickness are expressed in millimeters (mm).

**Table 1a**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| STO | Aperture stop | Planar surface | Infinite | -0.600 | | | |
| S1 | First lens | Standard surface | 3.727 | 1.307 | GLASS | 1.5891 | 61.248 |
| S2 | | Standard surface | -25.822 | 0.100 | | | |
| S3 | Second lens | Aspherical surface | -14.717 | 0.300 | PLASTIC | 1.651 | 21.518 |
| S4 | | Aspherical surface | 11.972 | 1.275 | | | |
| S5 | Third lens | Aspherical surface | 7.511 | 0.300 | PLASTIC | 1.5445 | 55.987 |
| S6 | | Aspherical surface | 3.219 | 0.138 | | | |
| S7 | Fourth lens | Aspherical surface | 3.568 | 0.600 | PLASTIC | 1.651 | 21.518 |
| S8 | | Aspherical surface | 5.020 | 0.534 | | | |
| S9 | Fifth lens | Aspherical surface | 73.066 | 0.600 | PLASTIC | 1.5445 | 55.987 |
| S10 | | Aspherical surface | -34.741 | 1.023 | | | |
| S11 | Sixth lens | Aspherical surface | 4.718 | 0.600 | PLASTIC | 1.5445 | 55.987 |
| S12 | | Aspherical surface | 3.081 | 0.300 | | | |
| S13 | Infrared filter | Planar surface | Infinite | 0.210 | - | | |
| S14 | | Planar surface | Infinite | 5.363 | | | |
| S15 | Image plane | Planar surface | Infinite | | | | |

Table 1b shows higher-order term coefficients A4, A6, A8 and A10 that can be used for the aspherical mirror surfaces S1-S12 in Embodiment 1.

**Table 1b**

| Surface number | K | A4 | A6 | A8 | A10 |
|---|---|---|---|---|---|
| S1 | 0 | 0 | 0 | 0 | 0 |
| S2 | 0 | 0 | 0 | 0 | 0 |
| S3 | 43.204 | 1.853E-002 | -7.457E-005 | -7.507E-004 | 9.181E-005 |
| S4 | 31.367 | 2.224E-002 | 4.226E-004 | -3.442E-004 | -1.434E-004 |
| S5 | 0 | 2.232E-002 | -1.318E-002 | 1.983E-003 | -3.937E-004 |
| S6 | 0 | 3.350E-002 | -2.800E-002 | 3.687E-003 | -2.137E-004 |
| S7 | 0 | 5.452E-003 | -1.749E-002 | 8.014E-003 | -9.922E-004 |
| S8 | 0 | -1.981E-002 | -1.596E-002 | 1.052E-002 | -1.362E-003 |
| S9 | 0 | 2.193E-002 | -1.733E-002 | 5.025E-003 | -3.491E-004 |
| S10 | 49.918 | 3.395E-002 | -9.430E-004 | -2.064E-004 | 1.131E-004 |
| S11 | 0 | -4.256E-002 | 5.272E-003 | -6.328E-004 | -2.407E-004 |
| S12 | 0 | -5.92E-002 | 1.138E-002 | -2.590E-003 | 1.940E-004 |

Table 1c shows the distance TTL that is on the optical axis and that is from the object side surface S1 of the first lens L1 to the imaging plane S15 corresponding to the object at infinity, a maximum image height ImgH of the optical lens assembly, the effective focal length f of the optical lens assembly, a focal length f1 of the first lens, a focal length f2 of the second lens, a focal length f3 of the third lens, a focal length f4 of the fourth lens, a focal length f5 of the fifth lens, and a focal length f6 of the sixth lens in the optical system in this embodiment.

**Table 1c**

| Parameter | TTL | ImgH | f | f1 | f2 | f3 | f4 | f5 | f6 |
|---|---|---|---|---|---|---|---|---|---|
| Value (mm) | 12.7 | 2.8 | 14.45 | 5.60 | -10.01 | -10.57 | 16.15 | 43.19 | -18.67 |

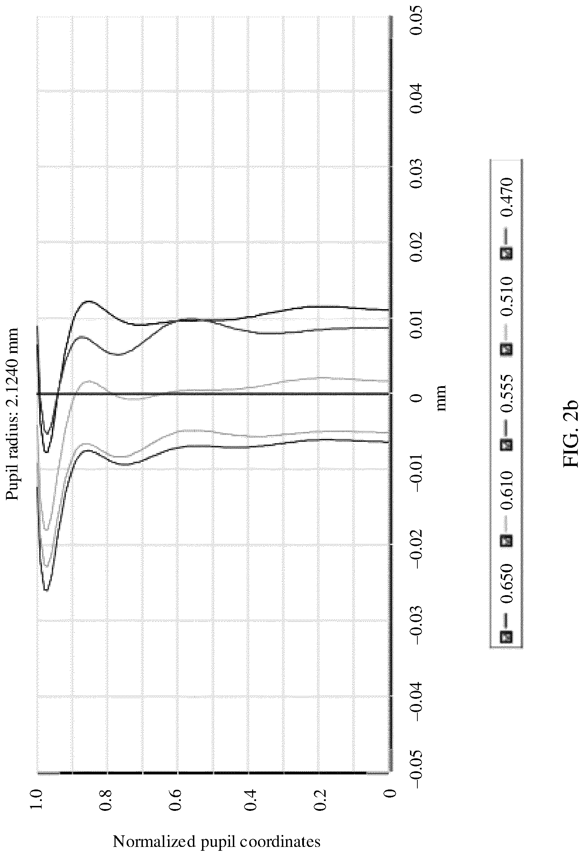

FIG. 2b is an axial spherical aberration curve of the optical system according to Embodiment 1, where a horizontal axis is a focusing position on the optical axis and a vertical axis is a field of view. The axial spherical aberration curve represents axial focusing positions of five rays of light having different wavelengths at different fields of view.

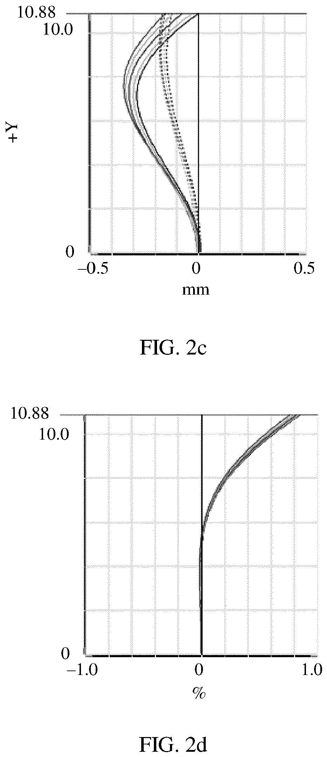

FIG. 2c is an astigmatic field curve of the optical system according to Embodiment 1, which represents a meridian field curvature and a sagittal field curvature. A solid line with a larger curvature represents the meridian field curvature, and a dotted line with a smaller curvature represents the sagittal field curvature.

FIG. 2d is a distortion curve of the optical system according to Embodiment 1, which represents distortion values corresponding to different fields of view.

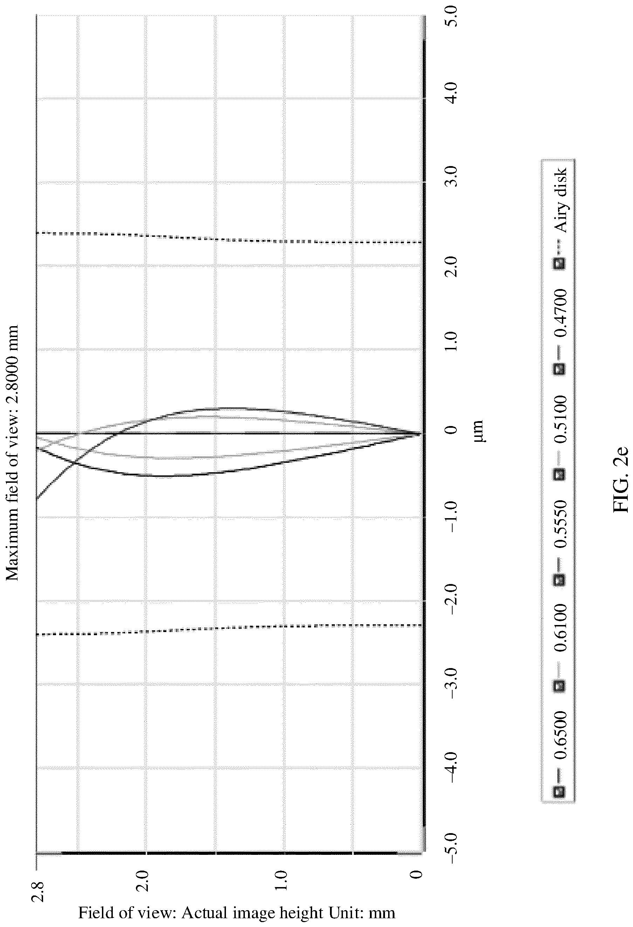

FIG. 2e is a longitudinal chromatic aberration curve of the optical system according to Embodiment 1, where a horizontal axis is an image height change and a vertical axis is a field of view. The longitudinal chromatic aberration curve represents longitudinal chromatic aberrations corresponding to five rays of light having different wavelengths at different fields of view.

It can be learned from FIG. 2b to FIG. 2e that the optical system provided in Embodiment 1 can achieve good imaging quality.

**Embodiment 2**

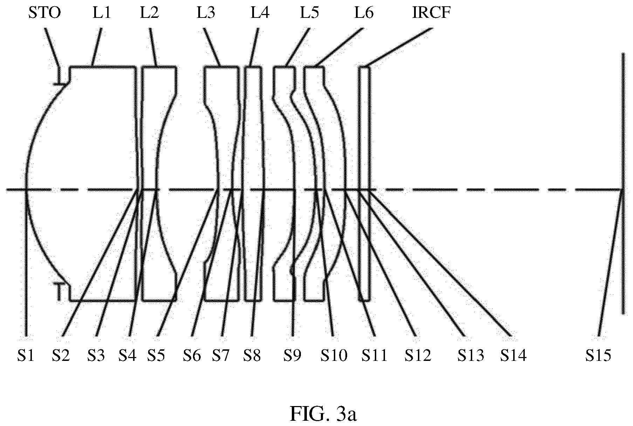

As shown in FIG. 3a, in an optical lens assembly in this implementation, six lenses successively arranged from an object side to an image side along an optical axis are a first lens L1, a second lens L2, a third lens L3, a fourth lens L4, a fifth lens L5, and a sixth lens L6. An infrared filter element IRCF may be disposed on an image side of the sixth lens L6, and a position of an electronic photosensitive element is an image plane S15 (also referred to as an imaging plane).

In another implementation, a vignetting stop may be disposed on an object side of the first lens L1, and an aperture stop may be disposed between the third lens L3 and the fourth lens L4. In addition, the vignetting stop may be disposed on the object side of the first lens L1, and a vignetting stop may be disposed between the fifth lens L5 and the sixth lens L6, so that a diameter of the optical lens assembly can be effectively reduced.

The first lens L1 has a positive focal power and is of a resin material. An object side surface S1 of the first lens L1 near the optical axis is a convex surface, an image side surface S2 thereof near the optical axis is a concave surface, and both are aspherical surfaces.

The second lens L2 has a negative focal power and is of a resin material. An object side surface S3 of the second lens L2 near the optical axis is a concave surface, an image side surface S4 thereof near the optical axis is a concave surface, and both are aspherical surfaces.

The third lens L3 has a negative focal power and is of a resin material. An object side surface S5 of the third lens L3 near the optical axis is a convex surface, an image side surface S6 thereof near the optical axis is a concave surface, and both are aspherical surfaces.

The fourth lens L4 has a positive focal power and is of a glass material. An object side surface S7 of the fourth lens L4 near the optical axis is a convex surface, an image side surface S8 thereof near the optical axis is a convex surface, and both are spherical surfaces.

The fifth lens L5 has a positive focal power and is of a resin material. An object side surface S9 of the fifth lens L5 near the optical axis is a concave surface, an image side surface S10 thereof near the optical axis is a convex surface, and both are aspherical surfaces.

The sixth lens L6 has a negative focal power and is of a resin material. An object side surface S11 of the sixth lens L6 near the optical axis is a concave surface, an image side surface S12 thereof near the optical axis is a concave surface, and both are aspherical surfaces.

A distance that is on the optical axis and that is from the object side surface S1 of the first lens L1 to the imaging plane S15 corresponding to an object at infinity is TTL, an effective focal length of the optical lens assembly is f, and TTL/f $\leq$ 0.96. In this way, the TTL can be relatively short, so that a miniaturized design of the optical lens assembly is implemented, and internal space of a terminal device is saved, thereby facilitating thinning development of the terminal device.

A dispersion coefficient (Abbe number) of the fourth lens L4 is V4, and 15 $\leq$ V4 $\leq$ 100. A chromatic aberration of the optical lens assembly can be corrected through proper allocation of a focal power and selection of a dispersion coefficient. The dispersion coefficient of the fourth lens L4 is greater than dispersion coefficients of other lens. For example, the dispersion coefficient of the fourth lens L4 may be greater than 58.

In this implementation, when temperature is changed by $\Delta$°C, a change amount of the focal length f is $\Delta$f. $\Delta$f/$\Delta$°C is defined as a temperature drift coefficient of the optical lens assembly, and the temperature drift coefficient meets the following condition: -1 $\mu$m/°C $\leq$ $\Delta$f/$\Delta$°C $\leq$ 1 $\mu$m/°C, so that a temperature drift effect of the optical lens assembly can be improved.

A coefficient $\beta$ of a relative refractive index to a temperature drift is defined as (dn/dt)rel and represents a temperature-dependent change coefficient of a refractive index of a material in a medium such as air. A coefficient $\beta4$ of a relative refractive index to a temperature drift of the fourth lens L4 meets: -9$\times$10-5 $\leq$ $\beta4$ $\leq$ 9$\times$10-5, a focal length of the fourth lens L4 is f4, the effective focal length of the optical lens assembly is f, and f4/f = 0.37 meets the condition: 0 $\leq$ f4/f $\leq$ 3. A relatively small system temperature drift coefficient can be obtained by using a material with a small coefficient of a refractive index to a temperature drift and through focal power allocation.

A spacing between the fourth lens L4 and the fifth lens L5 is SP4, a spacing between an object-side vertex position of the first lens L1 and an image-side vertex position of the sixth lens L6 is LT, and SP4/LT $\leq$ 0.5, so that implementation difficulty of assembling an optical lens is reduced.In Embodiment 2, the focal length of the optical lens assembly is f, a curvature radius of the object side surface S3 of the second lens L2 is R21, a curvature radius of the image side surface S4 of the second lens L2 is R22, and |f/R21| + |f/R22| = 3.46, thereby facilitating correction of a comprehensive aberration of the optical lens assembly. In this way, a longitudinal chromatic aberration of the optical lens assembly is less than 1.5 $\mu$m, an axial chromatic aberration thereof is less than 10 $\mu$m, and a distortion thereof is less than 1%.Table 2a is a table of characteristics of an optical system in this embodiment. A curvature radius and a thickness are expressed in millimeters (mm).

**Table 2a**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| VIG STO | Vignetting stop | Aspherical surface | Infinite | -0.675 | | | |

(continued)

| Surface number | Description | Surface type | Curvature radius | Thickness | Material | Refractive index | Dispersion coefficient |
|---|---|---|---|---|---|---|---|
| S1 | First lens | Aspherical surface | 3.1240 | 2.100 | PLASTIC | 1.544 | 56 |
| S2 | | Aspherical surface | 100.0000 | 0.369 | | | |
| S3 | Second lens | Aspherical surface | -16.7734 | 0.360 | PLASTIC | 1.66 | 22.4 |
| S4 | | Aspherical surface | 5.5583 | 0.612 | | | |
| S5 | Third lens | Aspherical surface | 35.0301 | 0.400 | PLASTIC | 1.544 | 56 |
| S6 | | Aspherical surface | 3.9970 | 0.020 | | | |
| STO | Aperture stop | Planar surface | Infinite | 0.030 | | | |
| S7 | Fourth lens | Spherical surface | 3.8050 | 0.890 | GLASS | 1.65 | 58.4 |
| S8 | | Spherical surface | -45.4086 | 1.010 | | | |
| S9 | Fifth lens | Aspherical surface | -6.2830 | 0.637 | PLASTIC | 1.544 | 56 |
| S10 | | Aspherical surface | -3.5690 | 0.102 | | | |
| S11 | Sixth lens | Aspherical surface | -3.3020 | 0.360 | PLASTIC | 1.67 | 20.4 |
| S12 | | Aspherical surface | 1781.1184 | 0.600 | | | |
| S13 | Infrared filter | Planar surface | | 0.210 | GLASS | 1.52 | 64.2 |
| S14 | | Planar surface | Infinite | 5.000 | | | |
| S15 | | Planar surface | Infinite | | | | |

Table 2b shows higher-order term coefficients A4, A6, A8 and A10 that can be used for the aspherical mirror surfaces S1-S12 in Embodiment 2.

**Table 2b**

| Surface number | K | A4 | A6 | A8 | A10 |
|---|---|---|---|---|---|
| S1 | 3.553E-01 | -3.930E-03 | -5.524E-04 | -4.874E-05 | -1.448E-05 |
| S2 | -9.900E+01 | -2.041E-02 | 4.008E-03 | -5.326E-04 | 4.143E-05 |
| S3 | 1.000E+00 | 2.168E-02 | -1.573E-03 | 2.498E-04 | 0 |
| S4 | 2.590E+00 | 3.915E-02 | -2.813E-04 | 1.376E-03 | 5.393E-04 |
| S5 | 1.000E+01 | -1.115E-01 | 3.914E-02 | -5.017E-03 | -3.776E-05 |

(continued)

| Surface number | K | A4 | A6 | A8 | A10 |
|---|---|---|---|---|---|
| S6 | -1.995E+01 | -8.369E-02 | 2. 870E-02 | -6.387E-03 | 8.687E-05 |
| S9 | -6.545E+01 | -7.778E-02 | -9.935E-03 | -6.843E-03 | 2.932E-03 |
| S10 | 3.031E+00 | -1.889E-03 | -5.501E-02 | 4.114E-02 | -1.445E-02 |
| S11 | -1.249E+01 | -6.463E-02 | 2.831E-03 | 2.546E-02 | -1.398E-02 |
| S12 | 0 | -3.769E-02 | 2.871E-02 | -9.989E-03 | 1.247E-03 |

Table 2c shows the distance TTL that is on the optical axis and that is from the object side surface S1 of the first lens L1 to the imaging plane S15 corresponding to the object at infinity, a maximum image height ImgH of the optical lens assembly, the effective focal length f of the optical lens assembly, a focal length f1 of the first lens, a focal length f2 of the second lens, a focal length f3 of the third lens, a focal length f4 of the fourth lens, a focal length f5 of the fifth lens, and a focal length f6 of the sixth lens in the optical system in this embodiment.

**Table 2c**

| Parameter | TTL | ImgH | f | f1 | f2 | f3 | f4 | f5 | f6 |
|---|---|---|---|---|---|---|---|---|---|
| Value (mm) | 12.7 | 2.5 | 14.46 | 5.86 | -6.43 | -8.3 | 5.41 | 11.33 | -6.04 |

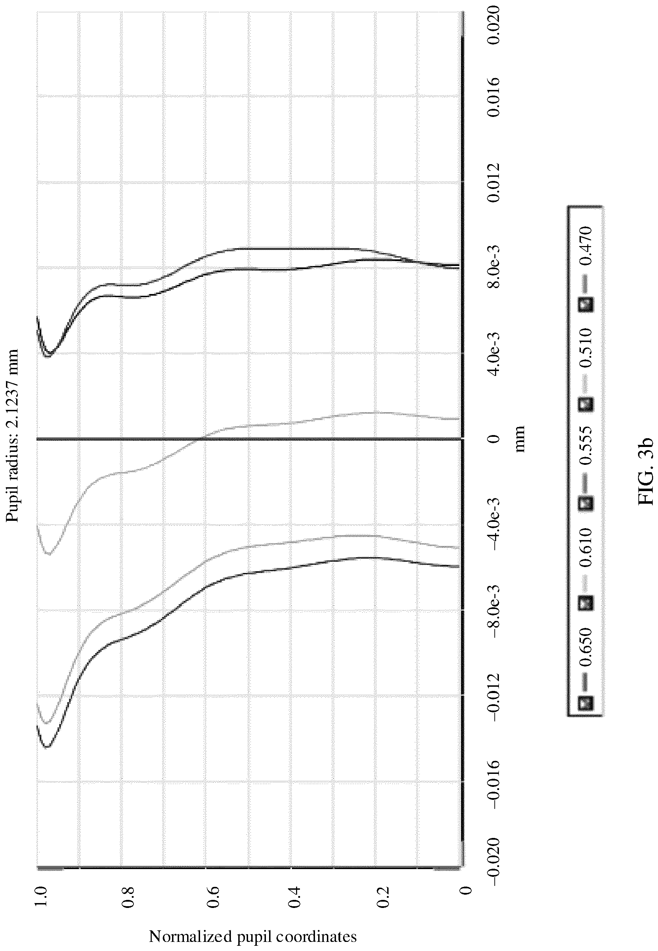

FIG. 3b is an axial spherical aberration curve of the optical system according to Embodiment 2, where a horizontal axis is a focusing position on the optical axis and a vertical axis is a field of view. The axial spherical aberration curve represents axial focusing positions of five rays of light having different wavelengths at different fields of view.

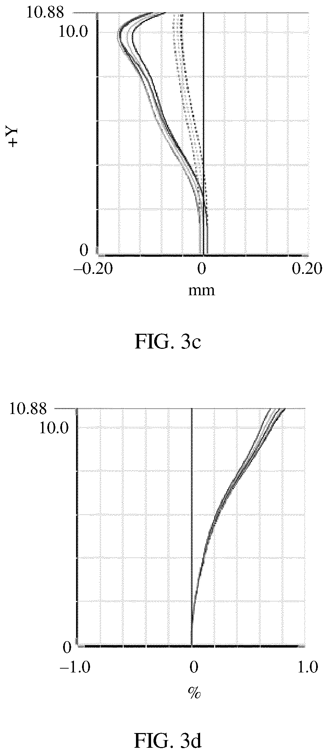

FIG. 3c is an astigmatic field curve of the optical system according to Embodiment 2, which represents a meridian field curvature and a sagittal field curvature. A solid line with a larger curvature represents the meridian field curvature, and a dotted line with a smaller curvature represents the sagittal field curvature.

FIG. 3d is a distortion curve of the optical system according to Embodiment 2, which represents distortion values corresponding to different fields of view.

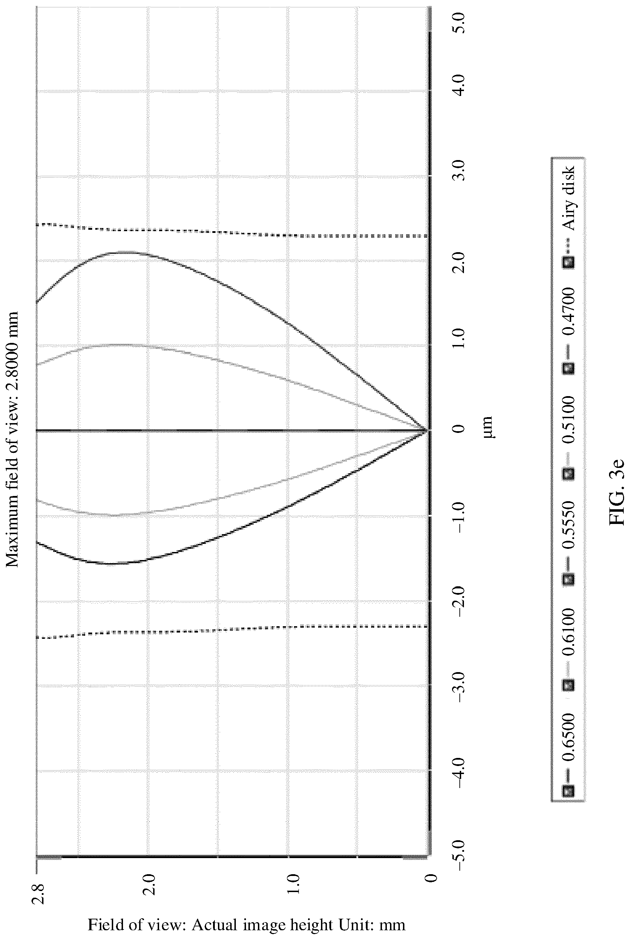

FIG. 3e is a longitudinal chromatic aberration curve of the optical system according to Embodiment 2, where a horizontal axis is an image height change and a vertical axis is a field of view. The longitudinal chromatic aberration curve represents longitudinal chromatic aberrations corresponding to five rays of light having different wavelengths at different fields of view.

It can be learned from FIG. 3b to FIG. 3e that the optical system provided in Embodiment 2 can achieve good imaging quality.

**Embodiment 3**

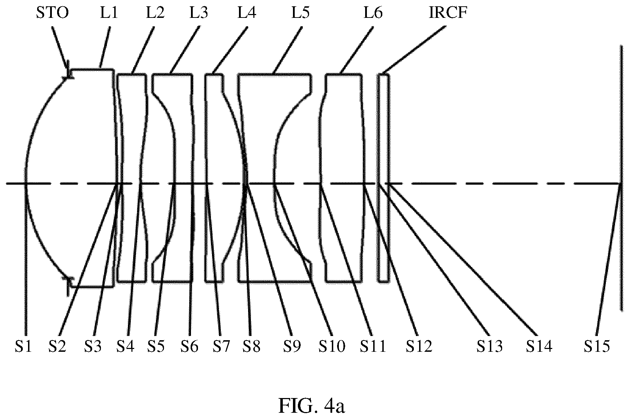

As shown in FIG. 4a, in an optical lens assembly, an aperture stop STO, a first lens L1, a second lens L2, a third lens L3, a fourth lens L4, a fifth lens L5, a sixth lens L6, and an infrared filter element IRCF are successively arranged from an object side to an image side along an optical axis, and an electronic photosensitive element is located at a position of an image plane S15, which is also referred to as an imaging plane.

The first lens L1 has a positive focal power and is of a resin material. An object side surface S1 of the first lens L1 near the optical axis is a convex surface, an image side surface S2 thereof near the optical axis is a convex surface, and both are aspherical surfaces.

The second lens L2 has a negative focal power and is of a resin material. An object side surface S3 of the second lens L2 near the optical axis is a concave surface, an image side surface S4 thereof near the optical axis is a concave surface, and both are aspherical surfaces.

The third lens L3 has a negative focal power and is of a resin material. An object side surface S5 of the third lens L3 near the optical axis is a concave surface, an image side surface S6 thereof near the optical axis is a concave surface, and both are aspherical surfaces.

The fourth lens L4 has a positive focal power and is of a glass material. An object side surface S7 of the fourth lens L4 near the optical axis is a convex surface, an image side surface S8 thereof near the optical axis is a convex surface, and both are spherical surfaces.

The fifth lens L5 has a positive focal power and is of a resin material. An object side surface S9 of the fifth lens L5 near the optical axis is a concave surface, an image side surface S10 thereof near the optical axis is a convex surface, and both are aspherical surfaces.

The sixth lens L6 has a negative focal power and is of a resin material. An object side surface S11 of the sixth lens L6 near the optical axis is a concave surface, an image side surface S12 thereof near the optical axis is a convex surface, and both are aspherical surfaces.

A distance that is on the optical axis and that is from the object side surface S1 of the first lens L1 to the imaging plane S15 corresponding to an object at infinity is TTL, an effective focal length of the optical lens assembly is f, and TTL/f ≤ 0.96. In this way, the TTL can be relatively short, so that a miniaturized design of the optical lens assembly is implemented, and internal space of a terminal device is saved, thereby facilitating thinning development of the terminal device.

In Embodiment 3, a dispersion coefficient (Abbe number) of the fourth lens L4 is V4, and 15 ≤ V4 ≤ 100. A chromatic aberration of the optical lens assembly can be corrected through proper allocation of a focal power and selection of a dispersion coefficient. Specifically, the dispersion coefficient of the fourth lens L4 is greater than dispersion coefficients of the other five lenses, and the dispersion coefficient of the fourth lens V4 may be greater than 60.

In Embodiment 3, when temperature is changed by Δ°C, a change amount of the focal length f is Δf. Δf/Δ°C is defined as a temperature drift coefficient of the optical lens assembly, and the temperature drift coefficient meets the following condition: -1 μm/°C ≤ Δf/Δ°C ≤ 1 μm/°C, so that a temperature drift effect of a photographic optical system can be improved.

A coefficient β of a relative refractive index to a temperature drift is defined as (dn/dt)rel and represents a temperature-dependent change coefficient of a refractive index of a material in a medium such as air. A coefficient β4 of a relative refractive index to a temperature drift of the fourth lens in Embodiment 3 meets: -9×10-5 ≤ β4 ≤ 9×10-5, a focal length of the fourth lens L4 is f4, the effective focal length of the optical lens assembly is f, and f4/f = 2.11 meets the condition: 0 ≤ f4/f ≤ 3. A relatively small system temperature drift coefficient can be obtained by using a material with a small coefficient of a refractive index to a temperature drift and through focal power allocation.

In Embodiment 3, a spacing between the fourth lens L4 and the fifth lens L5 is SP4, a spacing between an object-side vertex position of the first lens L1 and an image-side vertex position of the sixth lens L6 is LT, and SP4/LT ≤ 0.5, so that implementation difficulty of assembling a lens is reduced.

In Embodiment 3, the effective focal length of the optical lens assembly is f, a curvature radius of the object side surface of the second lens L2 is R21, a curvature radius of the image side surface of the second lens L2 is R22, and |f/R21| + |f/R22| = 2.805, thereby facilitating correction of a comprehensive aberration of the optical lens assembly. In this way, a longitudinal chromatic aberration of the optical lens assembly is less than 1.5 μm, an axial chromatic aberration thereof is less than 10 μm, and a distortion thereof is less than 1%.

Table 3a is a table of characteristics of an optical system in this embodiment. A curvature radius and a thickness are expressed in millimeters (mm).

**Table 3a**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| STO | Stop | Planar surface | Infinite | -0.7 | | | |
| S1 | First lens | Aspherical surface | 3.013E+000 | 2.373 | PLASTIC | 1.5445 | 55.987 |
| S2 | | Aspherical surface | -1.611E+001 | 0.1 | | | |
| S3 | Second lens | Aspherical surface | -1.120E+001 | 0.3 | PLASTIC | 1.651 | 21.514 |
| S4 | | Aspherical surface | 9.032E+000 | 1.307 | | | |
| S5 | Third lens | Aspherical surface | -7.410E+000 | 0.3 | PLASTIC | 1.5445 | 55.987 |
| S6 | | Aspherical surface | 6.436E+000 | 0.219 | | | |

(continued)

| Surface number | Description | Surface type | Curvature radius | Thickness | Material | Refractive index | Dispersion coefficient |
|---|---|---|---|---|---|---|---|
| S7 | Fourth lens | Spherical surface | 3.157E+001 | 0.45 | GLASS | 1.5168 | 64.167 |
| S8 | | Spherical surface | -3.157E+001 | 0.655 | | | |
| S9 | Fifth lens | Aspherical surface | -1.141E+001 | 0.45 | PLASTIC | 1.651 | 21.514 |
| S10 | | Aspherical surface | -4.977E+000 | 0.181 | | | |
| S11 | Sixth lens | Aspherical surface | -9.035E+000 | 0.45 | PLASTIC | 1.651 | 21.514 |
| S12 | | Aspherical surface | -1.935E+001 | 0.3 | | | |
| S13 | Infrared filter | Planar surface | Infinite | 0.21 | GLASS | 1.5168 | 64.167 |
| S14 | | Planar surface | Infinite | 5.402 | | | |
| S15 | | Planar surface | Infinite | - | | | |

Table 3b shows higher-order term coefficients A4, A6, A8 and A10 that can be used for the aspherical mirror surfaces S1-S12 in Embodiment 3.

**Table 3b**

| Surface number | K | A4 | A6 | A8 | A10 |
|---|---|---|---|---|---|
| S1 | 0 | -1.031277E-003 | 4.280694E-004 | -9.829000E-005 | 9.392864E-006 |
| S2 | 0 | 6.418752E-003 | 4.308468E-004 | -3.502189E-004 | 4.519436E-005 |
| S3 | -15.033 | 2.144542E-002 | -1.415616E-003 | -9.926943E-004 | 1.502825E-004 |
| S4 | 15.181 | 1.878531E-002 | 5.137963E-003 | -3.515317E-003 | 4.163879E-004 |
| S5 | 0 | 3.770443E-002 | -2.385722E-002 | 4.781175E-003 | -8.165729E-004 |
| S6 | 0 | 3.990110E-002 | -2.867382E-002 | 4.959798E-003 | -3.135500E-004 |
| S7 | 0 | 0 | 0 | 0 | 0 |
| S8 | 0 | 0 | 0 | 0 | 0 |
| S9 | 0 | 1.348682E-002 | -2.234238E-002 | -3.481712E-003 | 1.945647E-003 |
| S10 | 3.954 | 3.884617E-002 | -4.195945E-002 | 7.343274E-003 | 2.935175E-004 |
| S11 | 0 | -3.313593E-003 | -1.793786E-002 | 5.373703E-003 | -3.583306E-004 |
| S12 | 0 | -2.534491E-002 | 5.954407E-003 | -2.061416E-003 | 2.480932E-004 |

Table 3c shows the distance TTL that is on the optical axis and that is from the object side surface S1 of the first lens L1 to the imaging plane S15 corresponding to the object at infinity, a maximum image height ImgH of the optical lens assembly, the effective focal length f of the optical lens assembly, a focal length f1 of the first lens, a focal length f2 of the second lens, a focal length f3 of the third lens, a focal length f4 of the fourth lens, a focal length f5 of the fifth lens, and a focal length f6 of the sixth lens in the optical system in this embodiment.

**Table 3c**

| Parameter | TTL | ImgH | f | f1 | f2 | f3 | f4 | f5 | f6 |
|---|---|---|---|---|---|---|---|---|---|
| Value (mm) | 12.7 | 2.8 | 14.45 | 4.86 | -7.806 | -6.257 | 30.53 | 13.087 | -26.271 |

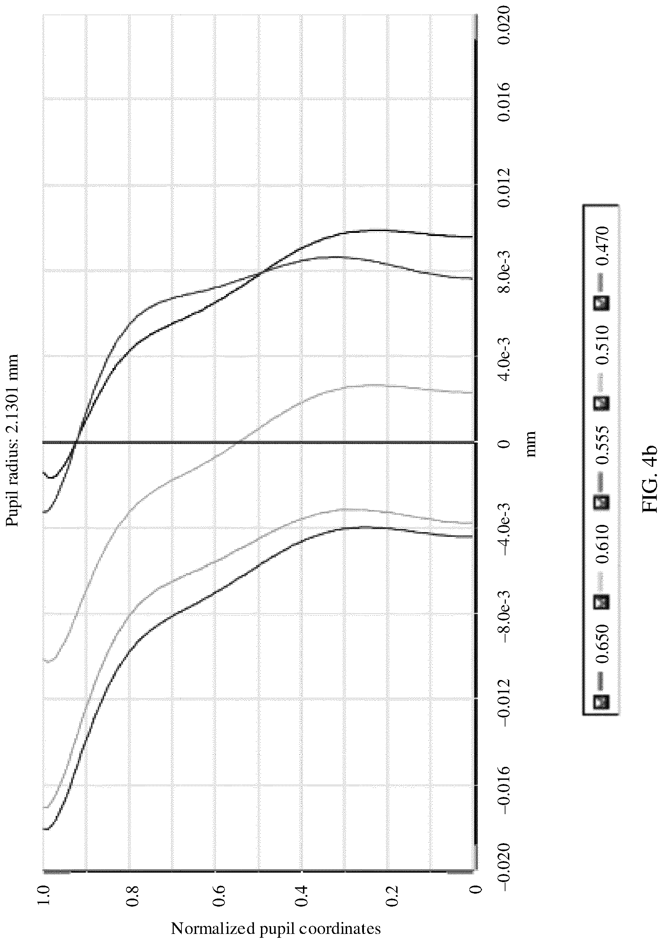

FIG. 4b is an axial spherical aberration curve of the optical system according to Embodiment 3, where a horizontal axis is a focusing position on the optical axis and a vertical axis is a field of view. The axial spherical aberration curve represents axial focusing positions of five rays of light having different wavelengths at different fields of view.

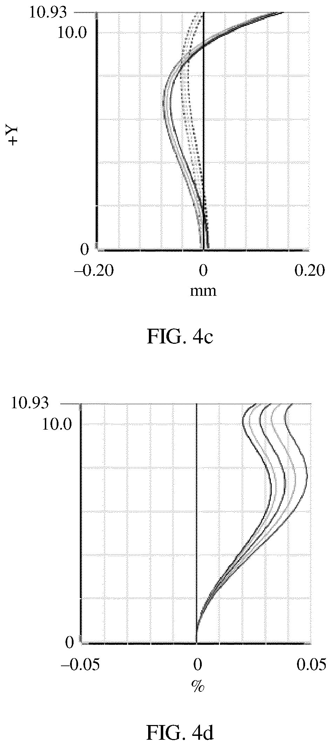

FIG. 4c is an astigmatic field curve of the optical system according to Embodiment 3, which represents a meridian field curvature and a sagittal field curvature. A solid line with a larger curvature represents the meridian field curvature, and a dotted line with a smaller curvature represents the sagittal field curvature.

FIG. 4d is a distortion curve of the optical system according to Embodiment 3, which represents distortion values corresponding to different fields of view.

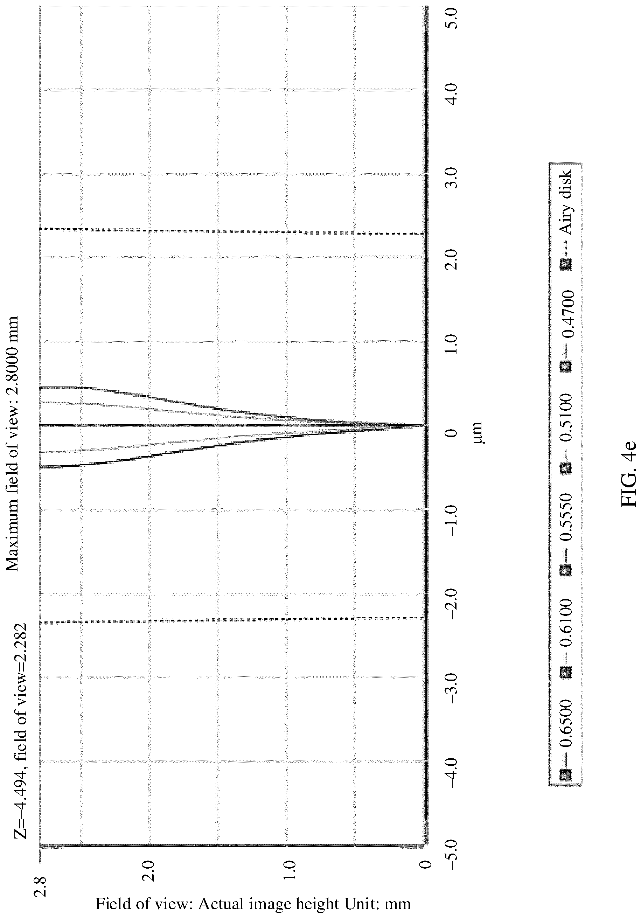

FIG. 4e is a longitudinal chromatic aberration curve of the optical system according to Embodiment 3, where a horizontal axis is an image height change and a vertical axis is a field of view. The longitudinal chromatic aberration curve represents longitudinal chromatic aberrations corresponding to five rays of light having different wavelengths at different fields of view.

It can be learned from FIG. 4b to FIG. 4e that the optical system provided in Embodiment 3 can achieve good imaging quality.

**Embodiment 4**

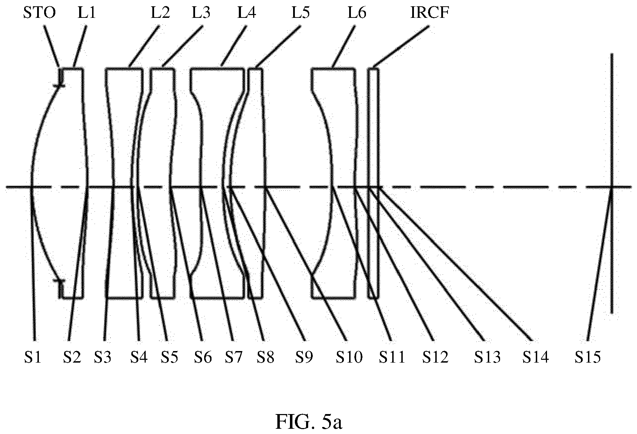

As shown in FIG. 5a, in an optical lens assembly, an aperture stop STO, a first lens L1, a second lens L2, a third lens L3, a fourth lens L4, a fifth lens L5, a sixth lens L6, and an infrared filter element IRCF are successively arranged from an object side to an image side along an optical axis, and an electronic photosensitive element is located at a position of an image plane S15, which is also referred to as an imaging plane.

The first lens L1 has a positive focal power and is of a resin material. An object side surface S1 of the first lens L1 near the optical axis is a convex surface, an image side surface S2 thereof near the optical axis is a convex surface, and both are aspherical surfaces.

The second lens L2 has a negative focal power and is of a resin material. An object side surface S3 of the second lens L2 near the optical axis is a concave surface, an image side surface S4 thereof near the optical axis is a concave surface, and both are aspherical surfaces.

The third lens L3 has a negative focal power and is of a resin material. An object side surface S5 of the third lens L3 near the optical axis is a convex surface, an image side surface S6 thereof near the optical axis is a concave surface, and both are aspherical surfaces.

The fourth lens L4 has a negative focal power and is of a resin material. An object side surface S7 of the fourth lens L4 near the optical axis is a convex surface, an image side surface S8 thereof near the optical axis is a concave surface, and both are aspherical surfaces.

The fifth lens L5 has a positive focal power and is of a glass material. An object side surface S9 of the fifth lens L5 near the optical axis is a convex surface, an image side surface S10 thereof near the optical axis is a convex surface, and both are spherical surfaces.

The sixth lens L6 has a negative focal power and is of a resin material. An object side surface S11 of the sixth lens L6 near the optical axis is a concave surface, an image side surface S12 thereof near the optical axis is a concave surface, and both are aspherical surfaces.

A distance that is on the optical axis and that is from the object side surface S1 of the first lens L1 to the imaging plane S15 corresponding to an object at infinity is TTL, an effective focal length of the optical lens assembly is f, and TTL/f $\leq$ 0.88. In this way, the TTL can be relatively short, so that a miniaturized design of the optical lens assembly is implemented, and internal space of a terminal device is saved, thereby facilitating thinning development of the terminal device.

In Embodiment 4, a dispersion coefficient (Abbe number) of the fifth lens L5 is V5, and 15 $\leq$ V5 $\leq$ 100. A chromatic aberration of the optical lens assembly can be corrected through proper allocation of a focal power and selection of a dispersion coefficient.

In Embodiment 4, when temperature is changed by $\Delta$°C, a change amount of the focal length f is $\Delta$f. $\Delta$f/$\Delta$°C is defined as a temperature drift coefficient of the optical lens assembly, and the temperature drift coefficient meets the following condition: -1 $\mu$m/°C $\leq$ $\Delta$f/$\Delta$°C $\leq$ 1 $\mu$m/°C, so that a temperature drift effect of a photographic optical system can be improved.

A coefficient β of a relative refractive index to a temperature drift is defined as (dn/dt)rel and represents a temperature-dependent change coefficient of a refractive index of a material in a medium such as air. A coefficient β5 of a relative refractive index to a temperature drift of the fifth lens L5 in Embodiment 4 meets: -9×10-5 ≤ β5 ≤ 9×10-5, a focal length of the fifth lens L5 is f5, the effective focal length of the optical lens assembly is f, and f5/f = 1.15 meets the condition: 0 ≤ f5/f ≤ 3. A relatively small temperature drift coefficient of the optical lens assembly can be obtained by using a material with a low coefficient of a refractive index to a temperature drift and through proper allocation of a focal power.

In Embodiment 4, a spacing between the fifth lens L5 and the sixth lens L6 is SP5, a spacing between an object-side vertex position of the first lens L1 and an image-side vertex position of the sixth lens L6 is LT, and SP5/LT ≤ 0.2, so that implementation difficulty of assembling an optical lens is reduced.

In another implementation, on the basis of the six lenses in this implementation, a vignetting stop (not shown) may be disposed in front of the first lens L1 (the object side) and a vignetting stop (not shown) may be disposed at rear of the sixth lens L6 (the image side), so that a diameter of the optical lens assembly can be effectively reduced.

In Embodiment 4, the effective focal length of the optical lens assembly is f, a curvature radius of the object side surface S3 of the second lens L2 is R21, a curvature radius of the image side surface S4 of the second lens L2 is R22, and |f/R21| + |f/R22| = 3.38, thereby facilitating correction of a comprehensive aberration of the optical lens assembly. In this way, a longitudinal chromatic aberration of the optical lens assembly is less than 1.5 μm, an axial chromatic aberration thereof is less than 10 μm, and a distortion thereof is less than 1%.

Table 4a is a table of characteristics of an optical system in this embodiment. A curvature radius and a thickness are expressed in millimeters (mm).

**Table 4a**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| STO | Aperture stop | Planar surface | Infinite | -0.600 | | | |
| S1 | First lens | Aspherical surface | 3.814 | 1.207 | PLASTIC | 1.5445 | 55.987 |
| S2 | | Aspherical surface | -10.021 | 0.572 | | | |
| S3 | Second lens | Aspherical surface | -12.384 | 0.4 | PLASTIC | 1.651 | 21.518 |
| S4 | | Aspherical surface | 6.515 | 0.128 | | | |
| S5 | Third lens | Aspherical surface | 14.564 | 0.710 | PLASTIC | 1.5445 | 55.987 |
| S6 | | Aspherical surface | 5.878 | 0.657 | | | |
| S7 | Fourth lens | Aspherical surface | 11.516 | 0.500 | PLASTIC | 1.5445 | 55.987 |
| S8 | | Aspherical surface | 6.890 | 0.161 | | | |
| S9 | Fifth lens | Standard surface | 5.336 | 0.749 | GLASS | 1.7174 | 29.51 |
| S10 | | Standard surface | -33.202 | 1.461 | | | |
| S11 | Sixth lens | Aspherical surface | -9.506 | 0.500 | PLASTIC | 1.5445 | 55.987 |

(continued)

| Surface number | Description | Surface type | Curvature radius | Thickness | Material | Refractive index | Dispersion coefficient |
|---|---|---|---|---|---|---|---|
| S12 | | Aspherical surface | 8.177 | 0.300 | | | |
| S13 | Infrared filter | Planar surface | Infinite | 0.210 | - | | |
| S14 | | Planar surface | Infinite | 5.100 | | | |
| S15 | Image plane | Planar surface | Infinite | | | | |

Table 4b shows higher-order term coefficients A4 and A6 that can be used for the aspherical mirror surfaces S1-S12 in Embodiment 4.

**Table 4b**

| Surface number | K | A4 | A6 |
|---|---|---|---|
| S1 | 3.372E-010 | -2.619E-003 | 2.267E-004 |
| S2 | 9.804E-011 | 6. 264E-003 | 7.814E-005 |
| S3 | -7.638E-011 | 1.003E-003 | 8.644E-005 |
| S4 | -2.089E-010 | -9.351E-003 | 1.110E-003 |
| S5 | 1.025E-010 | 8.042E-003 | 4.946E-004 |
| S6 | -1.409E-010 | -1.195E-002 | -1.115E-003 |
| S7 | -2.940E-010 | -8.872E-003 | -3.859E-003 |
| S8 | 2.589E-010 | 1.278E-002 | -8.109E-004 |
| S9 | 0 | 0 | 0 |
| S10 | 0 | 0 | 0 |
| S11 | -2.283E-010 | -1.486E-002 | 3.652E-004 |
| S12 | 1.813E-010 | -2.037E-002 | 1.469E-003 |

Table 4c shows the distance TTL that is on the optical axis and that is from the object side surface S1 of the first lens L1 to the imaging plane S15 corresponding to the object at infinity, a maximum image height ImgH of the optical lens assembly, the effective focal length f of the optical lens assembly, a focal length f1 of the first lens, a focal length f2 of the second lens, a focal length f3 of the third lens, a focal length f4 of the fourth lens, a focal length f5 of the fifth lens, and a focal length f6 of the sixth lens in the optical system in this embodiment.

**Table 4c**

| Parameter | TTL | ImgH | f | f1 | f2 | f3 | f4 | f5 | f6 |
|---|---|---|---|---|---|---|---|---|---|
| Value (mm) | 12.7 | 2.8 | 14.45 | 5.22 | -6.45 | -18.58 | -32.65 | 16.68 | -45.61 |

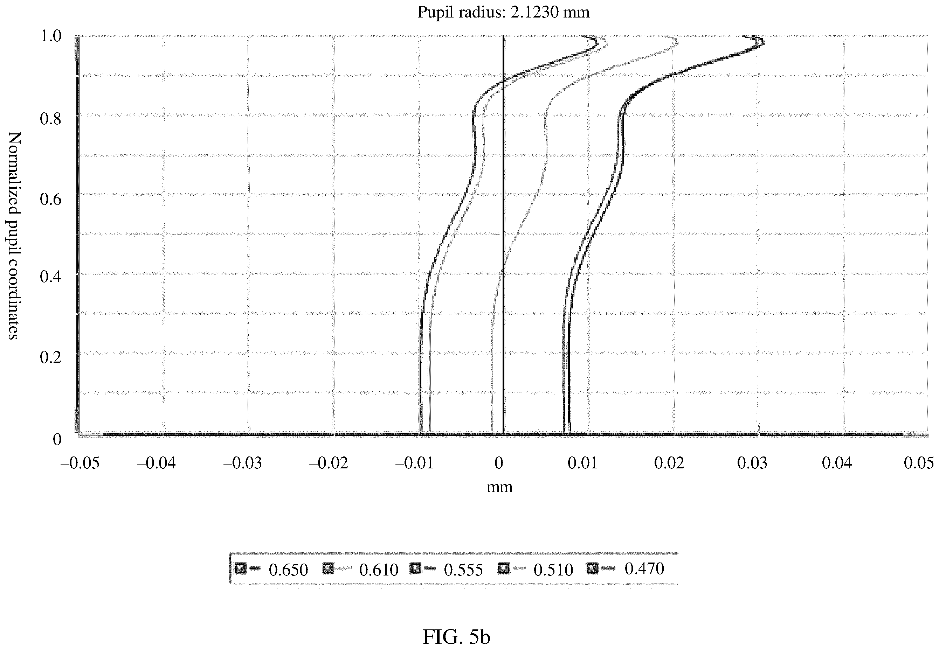

FIG. 5b is an axial spherical aberration curve of the optical system according to Embodiment 4, where a horizontal axis is a focusing position on the optical axis and a vertical axis is a field of view. The axial spherical aberration curve represents axial focusing positions of five rays of light having different wavelengths at different fields of view.

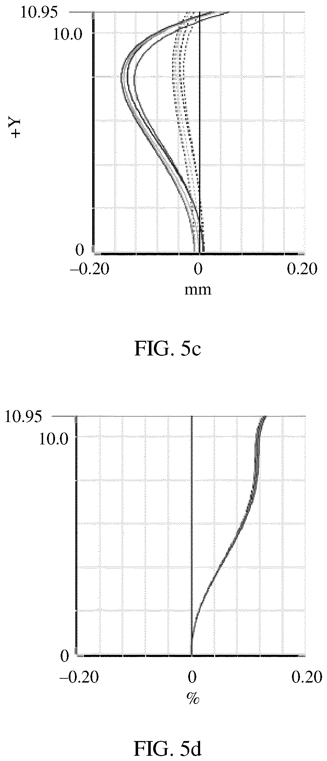

FIG. 5c is an astigmatic field curve of the optical system according to Embodiment 4, which represents a meridian field curvature and a sagittal field curvature. A solid line with a larger curvature represents the meridian field curvature, and a dotted line with a smaller curvature represents the sagittal field curvature.

FIG. 5d is a distortion curve of the optical system according to Embodiment 4, which represents distortion values corresponding to different fields of view.

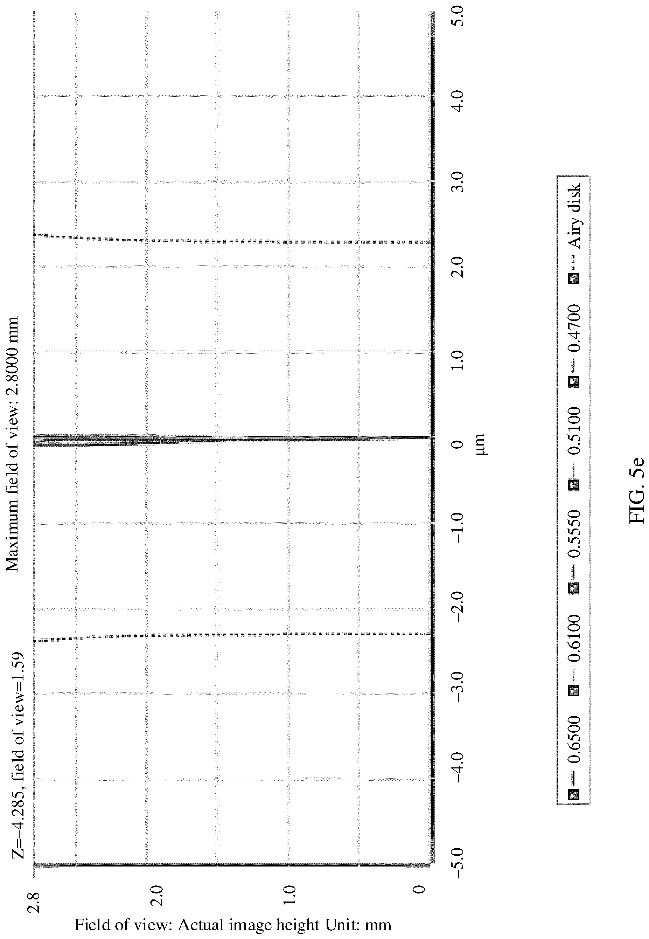

FIG. 5e is a longitudinal chromatic aberration curve of the optical system according to Embodiment 4, where a horizontal axis is an image height change and a vertical axis is a field of view. The longitudinal chromatic aberration curve represents longitudinal chromatic aberrations corresponding to five rays of light having different wavelengths at different fields of view.

It can be learned from FIG. 5b to FIG. 5e that the optical system provided in Embodiment 4 can achieve good imaging quality.

**Embodiment 5**

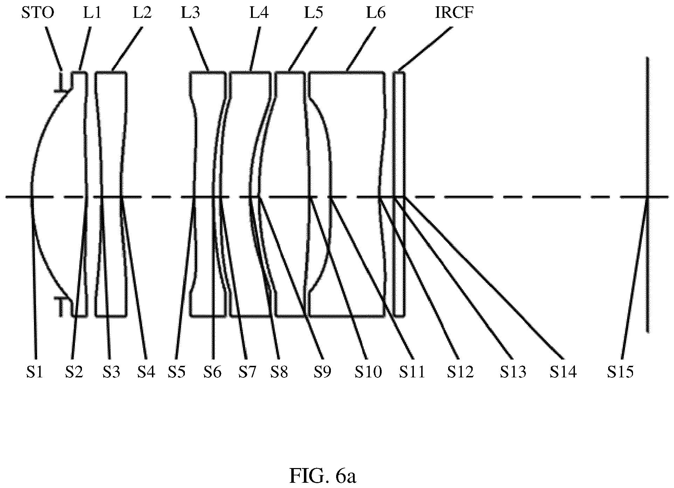

As shown in FIG. 6a, in an optical lens assembly provided in this implementation, an aperture stop STO, a first lens L1, a second lens L2, a third lens L3, a fourth lens L4, a fifth lens L5, a sixth lens L6, and an infrared filter element IRCF are successively arranged from an object side to an image side along an optical axis, and an electronic photosensitive element is located at a position of an image plane S15, which is also referred to as an imaging plane.

The first lens L1 has a positive focal power and is of a resin material. An object side surface S1 of the first lens L1 near the optical axis is a convex surface, an image side surface S2 thereof near the optical axis is a convex surface, and both are aspherical surfaces.

The second lens L2 has a negative focal power and is of a resin material. An object side surface S3 of the second lens L2 near the optical axis is a concave surface, an image side surface S4 thereof near the optical axis is a concave surface, and both are aspherical surfaces.

The third lens L3 has a negative focal power and is of a resin material. An object side surface S5 of the third lens L3 near the optical axis is a convex surface, an image side surface S6 thereof near the optical axis is a concave surface, and both are aspherical surfaces.

The fourth lens L4 has a negative focal power and is of a resin material. An object side surface S7 of the fourth lens L4 near the optical axis is a convex surface, an image side surface S8 thereof near the optical axis is a concave surface, and both are aspherical surfaces.

The fifth lens L5 has a positive focal power and is of a glass material. An object side surface S9 of the fifth lens L5 near the optical axis is a convex surface, an image side surface S10 thereof near the optical axis is a convex surface, and both are spherical surfaces.

The sixth lens L6 has a negative focal power and is of a resin material. An object side surface S11 of the sixth lens L6 near the optical axis is a concave surface, an image side surface S12 thereof near the optical axis is a concave surface, and both are aspherical surfaces.

A distance that is on the optical axis and that is from the object side surface S1 of the first lens L1 to the imaging plane S15 corresponding to an object at infinity is TTL, an effective focal length of the optical lens assembly is f, and TTL/f ≤ 0.88. In this way, the TTL can be relatively short, so that a miniaturized design of the optical lens assembly is implemented, and internal space of a terminal device is saved, thereby facilitating thinning development of the terminal device.

In Embodiment 5, a dispersion coefficient (Abbe number) of the fifth lens L5 is V5, and 15 ≤ V5 ≤ 100. A chromatic aberration of the optical lens assembly can be corrected through proper allocation of a focal power and selection of a dispersion coefficient.

In Embodiment 5, when temperature is changed by Δ°C, a change amount of the focal length f is Δf. Δf/Δ°C is defined as a temperature drift coefficient of the lens assembly, and the temperature drift coefficient meets the following condition: $-1\ \mu m/°C \le \Delta f/\Delta °C \le 1\ \mu m/°C$, so that a temperature drift effect of a photographic optical system can be improved.

A coefficient β of a relative refractive index to a temperature drift is defined as (dn/dt)rel and represents a temperature-dependent change coefficient of a refractive index of a material in a medium such as air. A coefficient β5 of a relative refractive index to a temperature drift of the fifth lens in Embodiment 5 meets: $-9 \times 10\text{-}5 \le \beta 5 \le 9 \times 10\text{-}5$, a focal length of the fifth lens is f5, the focal length of the lens assembly is f, and f5/f = 0.46 meets the condition: 0 ≤ f5/f ≤ 3. A relatively small temperature drift coefficient of the lens assembly can be obtained by using a material with a low coefficient of a refractive index to a temperature drift and through proper allocation of a focal power.

In Embodiment 5, a spacing between the fifth lens and the sixth lens is SP5, a spacing between an object-side vertex position of the first lens and an image-side vertex position of the sixth lens is LT, and SP5/LT ≤ 0.2, so that implementation difficulty of assembling a lens is reduced.

In another implementation, a vignetting stop (not shown) may be disposed in front of the first lens L1 (the object side), and a vignetting stop (not shown) may be disposed at rear of the sixth lens L6 (the image side), so that a diameter of the optical lens assembly can be effectively reduced.

In Embodiment 5, the effective focal length of the optical lens assembly is f, a curvature radius of the object side surface of the second lens is R21, a curvature radius of the image side surface of the second lens is R22, and |f/R21| + |f/R22| = 2.52, thereby facilitating correction of a comprehensive aberration of the lens assembly. In this way, a longitudinal chromatic aberration of the optical lens assembly is less than 1.5 $\mu$m, an axial chromatic aberration thereof is less than 10 $\mu$m, and a distortion thereof is less than 1%.

Table 5a is a table of characteristics of an optical system in this embodiment. A curvature radius and a thickness are expressed in millimeters (mm).

**Table 5a**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| STO | Aperture stop | Planar surface | Infinite | -0.600 | | | |
| S1 | First lens | Aspherical surface | 3.417 | 1.126 | PLASTIC | 1.5445 | 55.987 |
| S2 | | Aspherical surface | -17.624 | 0.312 | | | |
| S3 | Second lens | Aspherical surface | -18.871 | 0.400 | PLASTIC | 1.651 | 21.518 |
| S4 | | Aspherical surface | 8.277 | 1.499 | | | |
| S5 | Third lens | Aspherical surface | 13.834 | 0.399 | PLASTIC | 1.651 | 21.518 |
| S6 | | Aspherical surface | 8.767 | 0.150 | | | |
| S7 | Fourth lens | Aspherical surface | 24.950 | 0.599 | PLASTIC | 1.5445 | 55.987 |
| S8 | | Aspherical surface | 5.059 | 0.181 | | | |
| S9 | Fifth lens | Standard surface | 6.047 | 1.035 | GLASS | 1.7174 | 29.51 |
| S10 | | Standard surface | -20.966 | 0.442 | | | |
| S11 | Sixth lens | Aspherical surface | -33.716 | 0.999 | PLASTIC | 1.5445 | 55.987 |
| S12 | | Aspherical surface | 5.078 | 0.300 | | | |
| S13 | Infrared filter | Planar surface | Infinite | 0.210 | - | | |
| S14 | | Planar surface | Infinite | 4.999 | | | |
| S15 | Image plane | Planar surface | Infinite | | | | |

Table 5b shows higher-order term coefficients A4 and A6 that can be used for the aspherical mirror surfaces S1-S12 in Embodiment 5.

**Table 5b**

| Surface number | K | A4 | A6 |
|---|---|---|---|
| S1 | 8.239E-011 | -6.700E-005 | 2.876E-004 |
| S2 | 1.293E-010 | 7.598E-003 | -1.857E-004 |
| S3 | 1.021E-010 | -1.903E-004 | 6.641E-005 |
| S4 | -1.539E-010 | -9.922E-003 | 2.942E-004 |
| S5 | -6.777E-011 | -3.703E-003 | -2.476E-003 |
| S6 | 3.143E-010 | -1.942E-003 | 7.949E-004 |
| S7 | 7.724E-011 | 6.039E-003 | 3.634E-004 |
| S8 | 3.504E-010 | 1.288E-002 | -3.189E-003 |
| S9 | 0 | 0 | 0 |
| S10 | 0 | 0 | 0 |
| S11 | -2.633E-010 | -1.994E-002 | -9.277E-004 |
| S12 | 2.374E-010 | -2.667E-002 | 1.929E-003 |

Table 5c shows the distance TTL that is on the optical axis and that is from the object side surface S1 of the first lens L1 to the imaging plane S15 corresponding to the object at infinity, a maximum image height ImgH of the optical lens assembly, the effective focal length f of the optical lens assembly, a focal length f1 of the first lens, a focal length f2 of the second lens, a focal length f3 of the third lens, a focal length f4 of the fourth lens, a focal length f5 of the fifth lens, and a focal length f6 of the sixth lens in the optical system in this embodiment.

**Table 5c**

| Parameter | TTL | ImgH | f | f1 | f2 | f3 | f4 | f5 | f6 |
|---|---|---|---|---|---|---|---|---|---|
| Value (mm) | 12.7 | 2.8 | 14.46 | 5.34 | -8.71 | -37.64 | -11.74 | 6.61 | -8.01 |

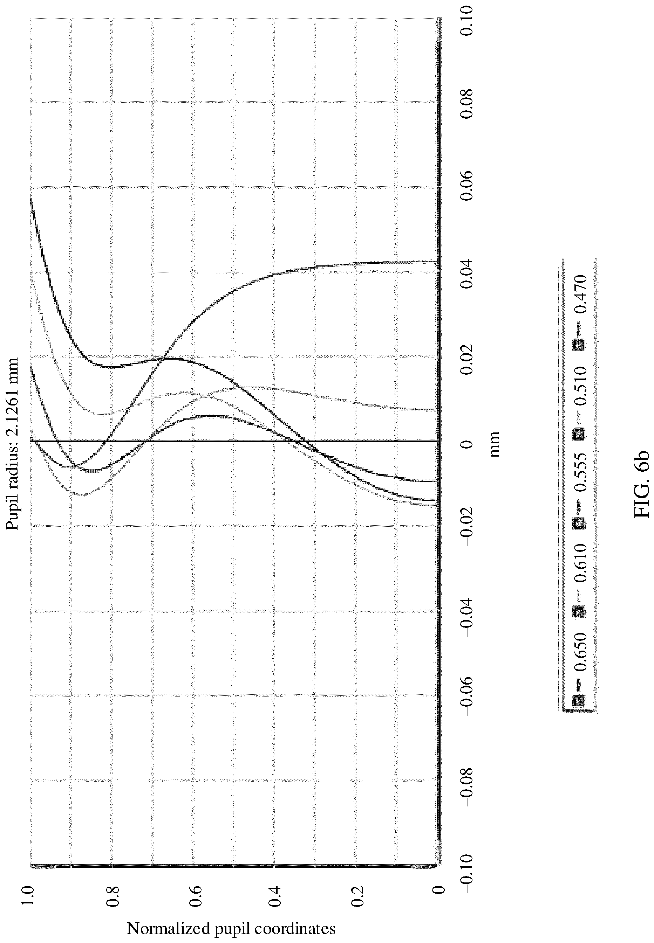

FIG. 6b is an axial spherical aberration curve of the optical system according to Embodiment 5, where a horizontal axis is a focusing position on the optical axis and a vertical axis is a field of view. The axial spherical aberration curve represents axial focusing positions of five rays of light having different wavelengths at different fields of view.

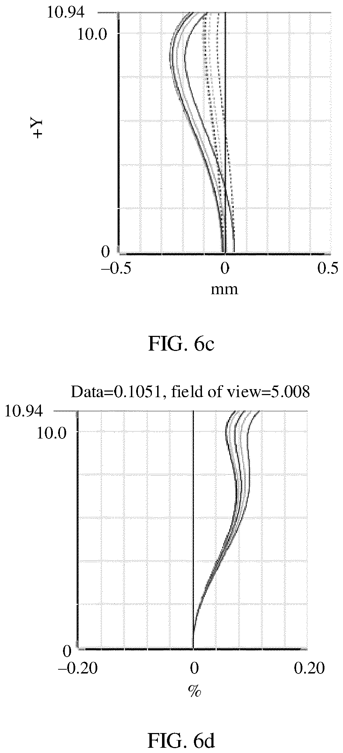

FIG. 6c is an astigmatic field curve of the optical system according to Embodiment 5, which represents a meridian field curvature and a sagittal field curvature. A solid line with a larger curvature represents the meridian field curvature, and a dotted line with a smaller curvature represents the sagittal field curvature.

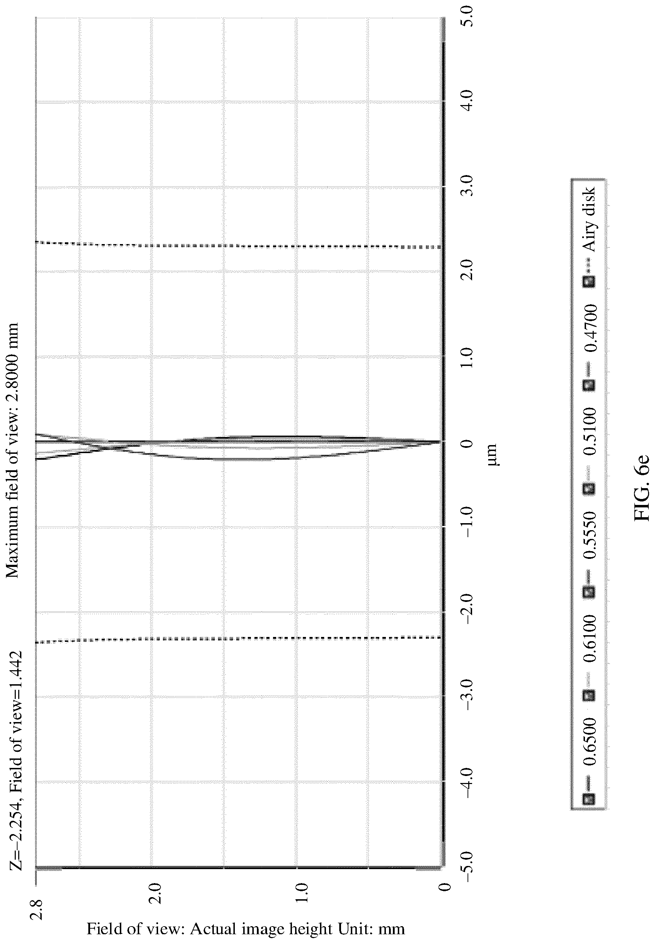

FIG. 6d is a distortion curve of the optical system according to Embodiment 5, which represents distortion values corresponding to different fields of view. FIG. 6e is a longitudinal chromatic aberration curve of the optical system according to Embodiment 5, where a horizontal axis is an image height change and a vertical axis is a field of view. The longitudinal chromatic aberration curve represents longitudinal chromatic aberrations corresponding to five rays of light having different wavelengths at different fields of view.

It can be learned from FIG. 6b to FIG. 6e that the optical system provided in Embodiment 5 can achieve good imaging quality.

**Embodiment 6**

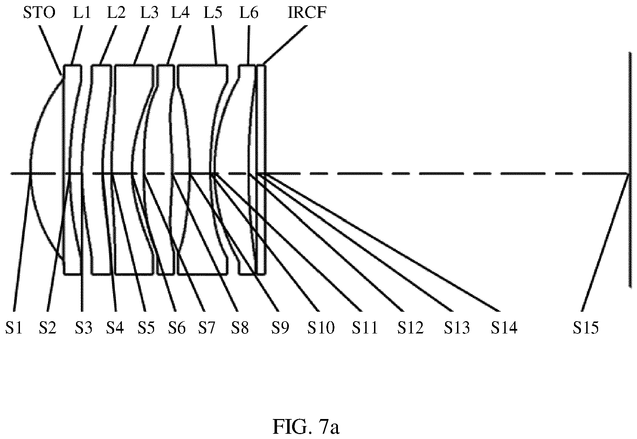

As shown in FIG. 7a, in an optical lens assembly, an aperture stop STO, a first lens L1, a second lens L2, a third lens L3, a fourth lens L4, a fifth lens L5, a sixth lens L6, and an infrared filter element IRCF are successively arranged from an object side to an image side along an optical axis, and an electronic photosensitive element is located at a position of an image plane S15, which is also referred to as an imaging plane.

The first lens L1 has a positive focal power and is of a resin material. An object side surface S1 of the first lens L1 near the optical axis is a convex surface, an image side surface S2 thereof near the optical axis is a concave surface, and both are aspherical surfaces.

The second lens L2 has a negative focal power and is of a resin material. An object side surface S3 of the second lens L2 near the optical axis is a convex surface, an image side surface S4 thereof near the optical axis is a

20

concave surface, and both are aspherical surfaces.

The third lens L3 has a negative focal power and is of a resin material. An object side surface S5 of the third lens L3 near the optical axis is a convex surface, an image side surface S6 thereof near the optical axis is a concave surface, and both are aspherical surfaces.

The fourth lens L4 has a positive focal power and is of a resin material. An object side surface S7 of the fourth lens L4 near the optical axis is a convex surface, an image side surface S8 thereof near the optical axis is a concave surface, and both are aspherical surfaces.

The fifth lens L5 has a negative focal power and is of a resin material. An object side surface S9 of the fifth lens L5 near the optical axis is a concave surface, an image side surface S10 thereof near the optical axis is a concave surface, and both are aspherical surfaces.

The sixth lens L6 has a positive focal power and is of a glass material. An object side surface S11 of the sixth lens L6 near the optical axis is a convex surface, an image side surface S12 thereof near the optical axis is a concave surface, and both are spherical surfaces.

A distance that is on the optical axis and that is from the object side surface of the first lens to the imaging plane corresponding to an object at infinity is TTL, an effective focal length of the lens assembly is f, and TTL/f $\leq$ 1. In this way, the TTL can be relatively short, so that a miniaturized design of the optical lens assembly is implemented, and internal space of a terminal device is saved, thereby facilitating thinning development of the terminal device.

In Embodiment 6, a dispersion coefficient (Abbe number) of the sixth lens is V6, and 15 $\leq$ V6 $\leq$ 100. A chromatic aberration of the lens assembly can be corrected through proper allocation of a focal power and selection of a dispersion coefficient.

In Embodiment 6, when temperature is changed by $\Delta$°C, a change amount of the focal length f is $\Delta$f. $\Delta$f/$\Delta$°C is defined as a temperature drift coefficient of the lens assembly, and the temperature drift coefficient meets the following condition: -1 $\mu$m/°C $\leq$ $\Delta$f/$\Delta$°C $\leq$ 1 $\mu$m/°C, so that a temperature drift effect of a photographic optical system can be improved.

A coefficient $\beta$ of a relative refractive index to a temperature drift is defined as (dn/dt)rel and represents a temperature-dependent change coefficient of a refractive index of a material in a medium such as air. A coefficient $\beta6$ of a relative refractive index to a temperature drift of the sixth lens in Embodiment 6 meets: -9$\times$10-5 $\leq$ $\beta6$ $\leq$ 9$\times$10-5, a focal length of the sixth lens is f6, the focal length of the lens assembly is f, and f6/f = 0.58 meets the condition: 0 $\leq$ f6/f $\leq$ 3. A relatively small system temperature drift coefficient can be obtained by using a material with a small coefficient of a refractive index to a temperature drift and through focal power allocation.

In Embodiment 6, a spacing between the third lens and the fourth lens is SP3, a spacing between an object-side vertex position of the first lens and an image-side vertex position of the sixth lens is LT, and SP3/LT $\leq$ 0.2, so that implementation difficulty of assembling a lens is reduced.

In addition, a vignetting stop ST1 may be disposed in front of the first lens (the object side), and a vignetting stop ST2 may be disposed at rear of the sixth lens (the image side), so that a diameter of the lens assembly can be effectively reduced.

In Embodiment 6, the effective focal length of the optical lens assembly is f, a curvature radius of the object side surface of the second lens is R21, a curvature radius of the image side surface of the second lens is R22, and |f/R21| + |f/R22| = 4.91, thereby facilitating correction of a comprehensive aberration of the optical lens assembly. In this way, a longitudinal chromatic aberration of the optical lens assembly is less than 1.5 $\mu$m, an axial chromatic aberration thereof is less than 10 $\mu$m, and a distortion thereof is less than 1%.

Table 6a is a table of characteristics of an optical system in this embodiment. A curvature radius and a thickness are expressed in millimeters (mm).

**Table 6a**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| STO | Aperture stop | Planar surface | Infinite | -0.800 | | | |
| S1 | First lens | Aspherical surface | 3.303 | 0.951 | PLASTIC | 1.5445 | 55.987 |
| S2 | | Aspherical surface | 8.782 | 0.292 | | | |

(continued)

| Surface number | Description | Surface type | Curvature radius | Thickness | Material | Refractive index | Dispersion coefficient |
|---|---|---|---|---|---|---|---|
| S3 | Second lens | Aspherical surface | 6.864 | 0.500 | PLASTIC | 1.651 | 21.518 |
| S4 | | Aspherical surface | 5.185 | 0.215 | | | |
| S5 | Third lens | Aspherical surface | 7.796 | 0.500 | PLASTIC | 1.651 | 21.518 |
| S6 | | Aspherical surface | 3.222 | 0.286 | | | |
| S7 | Fourth lens | Aspherical surface | 16.716 | 0.692 | PLASTIC | 1.5445 | 55.987 |
| S8 | | Aspherical surface | -6.876 | 0.418 | | | |
| S9 | Fifth lens | Aspherical surface | -8.114 | 0.499 | PLASTIC | 1.5445 | 55.987 |
| S10 | | Aspherical surface | 7.656 | 0.100 | | | |
| S11 | Sixth lens | Standard surface | 4.369 | 0.822 | GLASS | 1.7174 | 29.51 |
| S12 | | Standard surface | 14.158 | 0.200 | | | |
| S13 | Infrared filter | Planar surface | Infinite | 0.210 | - | | |
| S14 | | Planar surface | Infinite | 8.824 | | | |
| S15 | Image plane | Planar surface | Infinite | | | | |

Table 6b shows higher-order term coefficients A4 and A6 that can be used for the aspherical mirror surfaces S1-S12 in Embodiment 6.

**Table 6b**

| Surface number | K | A4 | A6 |
|---|---|---|---|
| S1 | 1.184E-010 | -1.056E-003 | 3.191E-005 |
| S2 | -3.640E-010 | 2.707E-003 | -4.671E-004 |
| S3 | 2.982E-010 | -3.627E-003 | -2.118E-004 |
| S4 | -3.946E-010 | -1.875E-002 | 1.579E-003 |
| S5 | -4.008E-010 | -1.842E-002 | 1.899E-003 |
| S6 | -1.604E-010 | -1.133E-002 | -1.704E-004 |
| S7 | 2.329E-010 | 1.501E-002 | -4.488E-004 |
| S8 | -1.544E-010 | 2.693E-002 | -1.474E-003 |
| S9 | -7.948E-003 | 1.052E-002 | -2.583E-003 |
| S10 | -2.949E-003 | 1.999E-003 | 9.662E-004 |

(continued)

| Surface number | K | A4 | A6 |
|---|---|---|---|
| S11 | 0 | 0 | 0 |
| S12 | 0 | 0 | 0 |

Table 6c shows the distance TTL that is on the optical axis and that is from the object side surface S1 of the first lens L1 to the imaging plane S15 corresponding to the object at infinity, a maximum image height ImgH of the optical lens assembly, the effective focal length f of the optical lens assembly, a focal length f1 of the first lens, a focal length f2 of the second lens, a focal length f3 of the third lens, a focal length f4 of the fourth lens, a focal length f5 of the fifth lens, and a focal length f6 of the sixth lens in the optical system in this embodiment.

Table 6c

| Parameter | TTL | ImgH | f | f1 | f2 | f3 | f4 | f5 | f6 |
|---|---|---|---|---|---|---|---|---|---|
| Value (mm) | 14.51 | 2.8 | 14.50 | 9.13 | -36.62 | -8.75 | 9.01 | -6.88 | 8.46 |

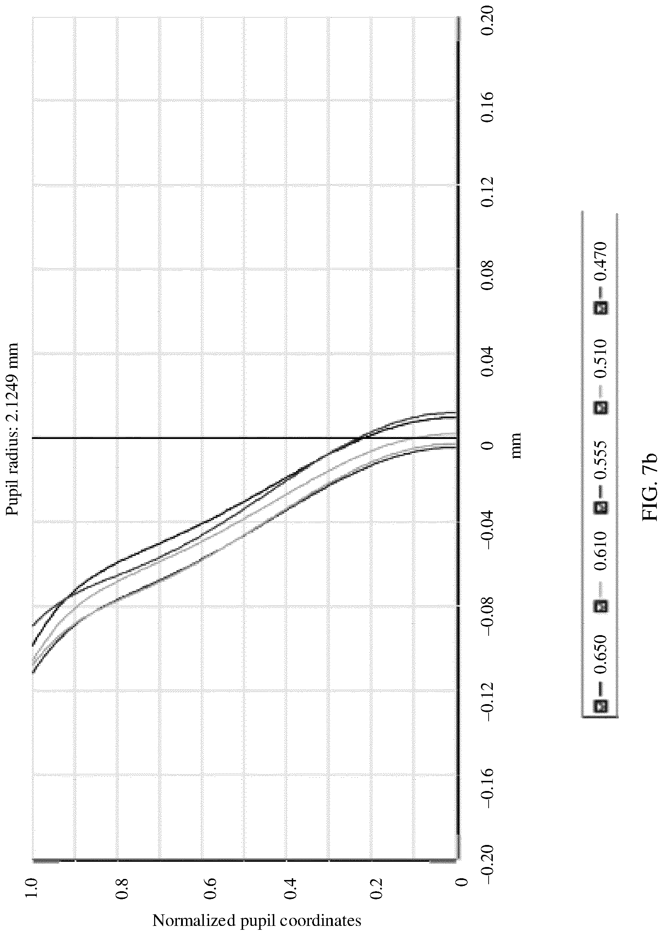

FIG. 7b is an axial spherical aberration curve of the optical system according to Embodiment 6, where a horizontal axis is a focusing position on the optical axis and a vertical axis is a field of view. The axial spherical aberration curve represents axial focusing positions of five rays of light having different wavelengths at different fields of view.

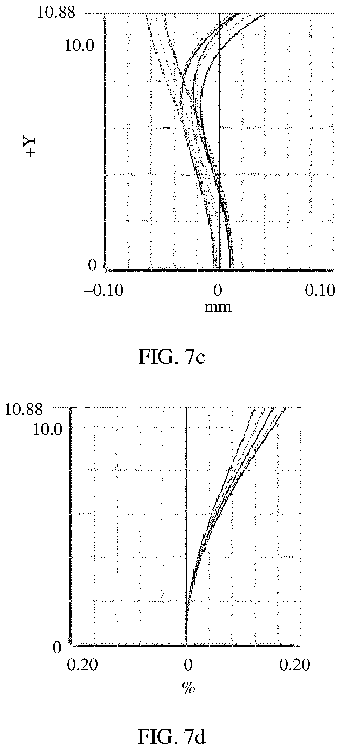

FIG. 7c is an astigmatic field curve of the optical system according to Embodiment 6, which represents a meridian field curvature and a sagittal field curvature. A solid line with a larger curvature represents the meridian field curvature, and a dotted line with a smaller curvature represents the sagittal field curvature.

FIG. 7d is a distortion curve of the optical system according to Embodiment 6, which represents distortion values corresponding to different fields of view.

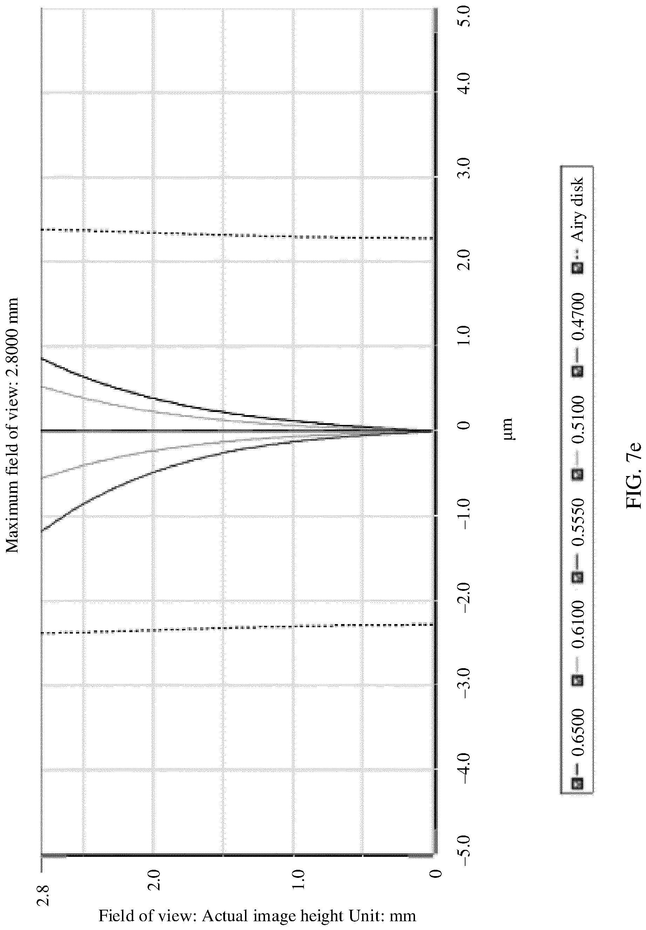

FIG. 7e is a longitudinal chromatic aberration curve of the optical system according to Embodiment 6, where a horizontal axis is an image height change and a vertical axis is a field of view. The longitudinal chromatic aberration curve represents longitudinal chromatic aberrations corresponding to five rays of light having different wavelengths at different fields of view.

It can be learned from FIG. 7b to FIG. 7e that the optical system provided in Embodiment 6 can achieve good imaging quality.

**Embodiment 7**

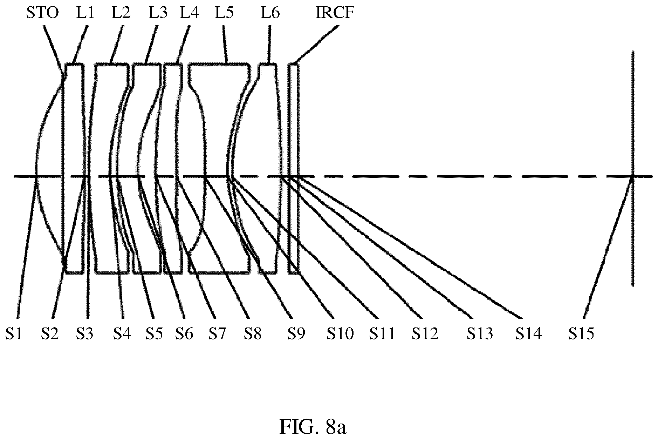

As shown in FIG. 8a, in an optical lens assembly, an aperture stop STO, a first lens L1, a second lens L2, a third lens L3, a fourth lens L4, a fifth lens L5, a sixth lens L6, and an infrared filter element IRCF are successively arranged from an object side to an image side along an optical axis, and an electronic photosensitive element is located at a position of an image plane S15, which is also referred to as an imaging plane.

The first lens L1 has a positive focal power and is of a resin material. An object side surface S1 of the first lens L1 near the optical axis is a convex surface, an image side surface S2 thereof near the optical axis is a convex surface, and both are aspherical surfaces.

The second lens L2 has a negative focal power and is of a resin material. An object side surface S3 of the second lens L2 near the optical axis is a convex surface, an image side surface S4 thereof near the optical axis is a concave surface, and both are aspherical surfaces.

The third lens L3 has a negative focal power and is of a resin material. An object side surface S5 of the third lens L3 near the optical axis is a convex surface, an image side surface S6 thereof near the optical axis is a concave surface, and both are aspherical surfaces.

The fourth lens L4 has a positive focal power and is of a resin material. An object side surface S7 of the fourth lens L4 near the optical axis is a convex surface, an image side surface S8 thereof near the optical axis is a concave surface, and both are aspherical surfaces.

The fifth lens L5 has a negative focal power and is of a resin material. An object side surface S9 of the fifth lens L5 near the optical axis is a concave surface, an image side surface S10 thereof near the optical axis is a concave surface, and both are aspherical surfaces.

The sixth lens L6 has a negative focal power and is of a glass material. An object side surface S11 of the sixth lens L6 near the optical axis is a convex surface, an image side surface S12 thereof near the optical axis is a convex surface, and both are spherical surfaces.

A distance that is on the optical axis and that is from the object side surface of the first lens to the imaging plane corresponding to an object at infinity is TTL, an effective focal length of the lens assembly is f, and TTL/f ≤ 1. In this way, the TTL can be relatively short, so that a miniaturized design of the optical lens assembly is implemented, and internal space of a terminal device is saved, thereby facilitating thinning development of the terminal device.

In Embodiment 7, a dispersion coefficient (Abbe number) of the sixth lens is V6, and 15 ≤ V6 ≤ 100. A chromatic aberration of the lens assembly can be corrected through proper allocation of a focal power and selection of a dispersion coefficient.

In Embodiment 7, when temperature is changed by Δ°C, a change amount of the focal length f is Δf. Δf/Δ°C is defined as a temperature drift coefficient of the lens assembly, and the temperature drift coefficient meets the following condition: -1 μm/°C ≤ Δf/Δ°C ≤ 1 μm/°C, so that a temperature drift effect of a photographic optical system can be improved.

A coefficient β of a relative refractive index to a temperature drift is defined as (dn/dt)rel and represents a temperature-dependent change coefficient of a refractive index of a material in a medium such as air. A coefficient β6 of a relative refractive index to a temperature drift of the sixth lens in Embodiment 7 meets: $-9 \times 10^{-5} \leq \beta6 \leq 9 \times 10^{-5}$, a focal length of the sixth lens is f6, the focal length of the lens assembly is f, and f6/f = 2.93 meets the condition: 0 ≤ f6/f ≤ 3. A relatively small system temperature drift coefficient can be obtained by using a material with a small coefficient of a refractive index to a temperature drift and through focal power allocation.

In Embodiment 7, a spacing between the third lens and the fourth lens is SP3, a spacing between an object-side vertex position of the first lens L1 and an image-side vertex position of the sixth lens L6 is LT, and SP3/LT ≤ 0.2, so that implementation difficulty of assembling an optical lens is reduced.

In another implementation, a vignetting stop (not shown) may be disposed in front of the first lens L1 (the object side), and a vignetting stop (not shown) may be disposed at rear of the sixth lens L6 (the image side), so that a diameter of the optical lens assembly can be effectively reduced.

In Embodiment 7, the effective focal length of the optical lens assembly is f, a curvature radius of the object side surface S3 of the second lens L2 is R21, a curvature radius of the image side surface S4 of the second lens L2 is R22, and |f/R21| + |f/R22| = 4.45, thereby facilitating correction of a comprehensive aberration of the optical lens assembly. In this way, a longitudinal chromatic aberration of the optical lens assembly is less than 1.5 μm, an axial chromatic aberration thereof is less than 10 μm, and a distortion thereof is less than 1%.

Table 7a is a table of characteristics of an optical system in this embodiment. A curvature radius and a thickness are expressed in millimeters (mm).

**Table 7a**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| STO | Aperture stop | Planar surface | Infinite | -0.650 | | | |
| S1 | First lens | Aspherical surface | 3.293 | 1.166 | PLASTIC | 1.5445 | 55.987 |
| S2 | | Aspherical surface | -45.430 | 0.100 | | | |
| S3 | Second lens | Aspherical surface | 16.177 | 0.500 | PLASTIC | 1.651 | 21.518 |
| S4 | | Aspherical surface | 4.076 | 0.167 | | | |
| S5 | Third lens | Aspherical surface | 4.711 | 0.500 | PLASTIC | 1.5445 | 55.987 |
| S6 | | Aspherical surface | 2.743 | 0.424 | | | |
| S7 | Fourth lens | Aspherical surface | 17.166 | 0.500 | PLASTIC | 1.651 | 21.518 |
| S8 | | Aspherical surface | -22.724 | 0.685 | | | |

(continued)

| Surface number | Description | Surface type | Curvature radius | Thickness | Material | Refractive index | Dispersion coefficient |
|---|---|---|---|---|---|---|---|
| S9 | Fifth lens | Aspherical surface | -27.318 | 0.541 | PLASTIC | 1.5445 | 55.987 |
| S10 | | Aspherical surface | 3.841 | 0.109 | | | |
| S11 | Sixth lens | Standard surface | 4.090 | 1.167 | GLASS | 1.5168 | 64.212 |
| S12 | | Standard surface | -19.804 | 0.200 | | | |
| S13 | Infrared filter | Planar surface | Infinite | 0.210 | - | | |
| S14 | | Planar surface | Infinite | 8.006 | | | |
| S15 | Image plane | Planar surface | Infinite | | | | |

Table 7b shows higher-order term coefficients A4 and A6 that can be used for the aspherical mirror surfaces S1-S12 in Embodiment 7.

**Table 7b**

| Surface number | K | A4 | A6 |
|---|---|---|---|
| S1 | 2.568E-010 | -3.435E-003 | -3.857E-004 |
| S2 | 2.972E-010 | -2.013E-003 | 4.667E-004 |
| S3 | 8.224E-011 | -2.891E-004 | 2.517E-004 |
| S4 | -1.529E-010 | -7.294E-003 | 6.003E-004 |
| S5 | -3.495E-010 | -1.414E-002 | 2.569E-003 |
| S6 | -1.349E-010 | -1.304E-002 | -1.833E-003 |
| S7 | 2.378E-010 | 1.084E-002 | -1.169E-003 |
| S8 | 3.626E-010 | 1.806E-002 | --1.059E-003 |
| S9 | 1.675E-002 | -1.457E-002 | -2.174E-003 |
| S10 | 2.059E-002 | -2.335E-002 | 2.949E-003 |
| S11 | 0 | 0 | 0 |
| S12 | 0 | 0 | 0 |

Table 7c shows the distance TTL that is on the optical axis and that is from the object side surface S1 of the first lens L1 to the imaging plane S15 corresponding to the object at infinity, a maximum image height ImgH of the optical lens assembly, the effective focal length f of the optical lens assembly, a focal length f1 of the first lens, a focal length f2 of the second lens, a focal length f3 of the third lens, a focal length f4 of the fourth lens, a focal length f5 of the fifth lens, and a focal length f6 of the sixth lens in the optical system in this embodiment.

**Table 7c**

| Parameter | TTL | ImgH | f | f1 | f2 | f3 | f4 | f5 | f6 |
|---|---|---|---|---|---|---|---|---|---|
| Value (mm) | 14.28 | 2.8 | 14.5 | 5.67 | -8.44 | -13.20 | 14.97 | -6.07 | -42.47 |

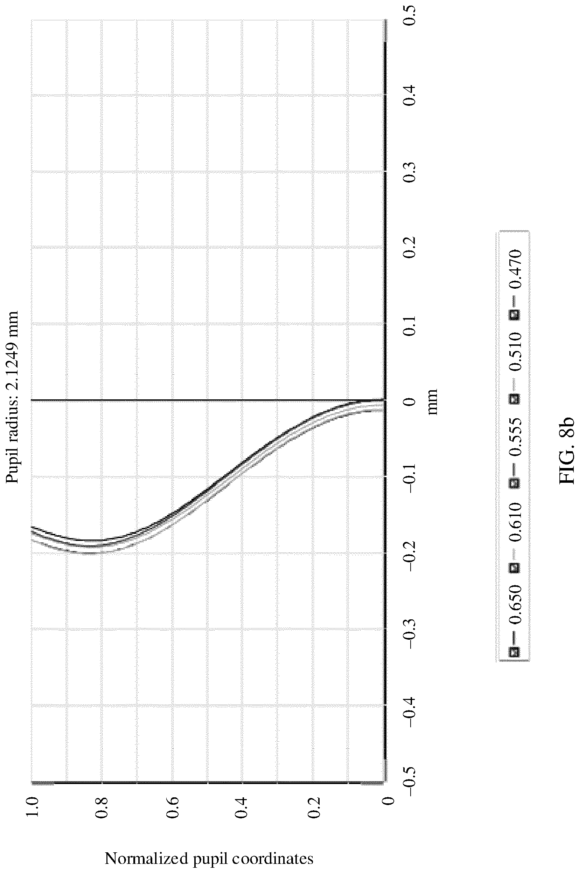

FIG. 8b is an axial spherical aberration curve of the optical system according to Embodiment 7, where a horizontal axis is a focusing position on the optical axis and a vertical axis is a field of view. The axial spherical aberration curve represents axial focusing positions of five rays of light having different wavelengths at different fields of view.

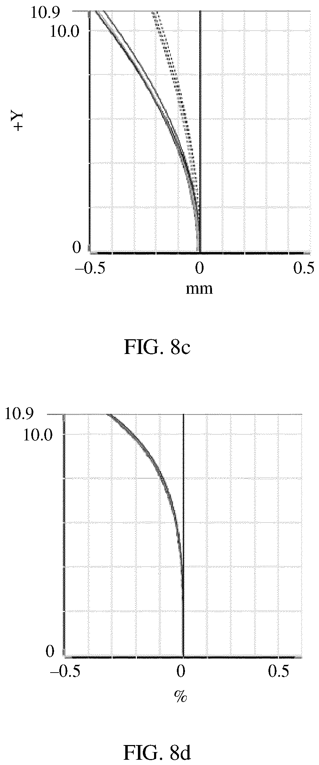

FIG. 8c is an astigmatic field curve of the optical system according to Embodiment 7, which represents a meridian field curvature and a sagittal field curvature. A solid line with a larger curvature represents the meridian field curvature, and a dotted line with a smaller curvature represents the sagittal field curvature.

FIG. 8d is a distortion curve of the optical system according to Embodiment 7, which represents distortion values corresponding to different fields of view.

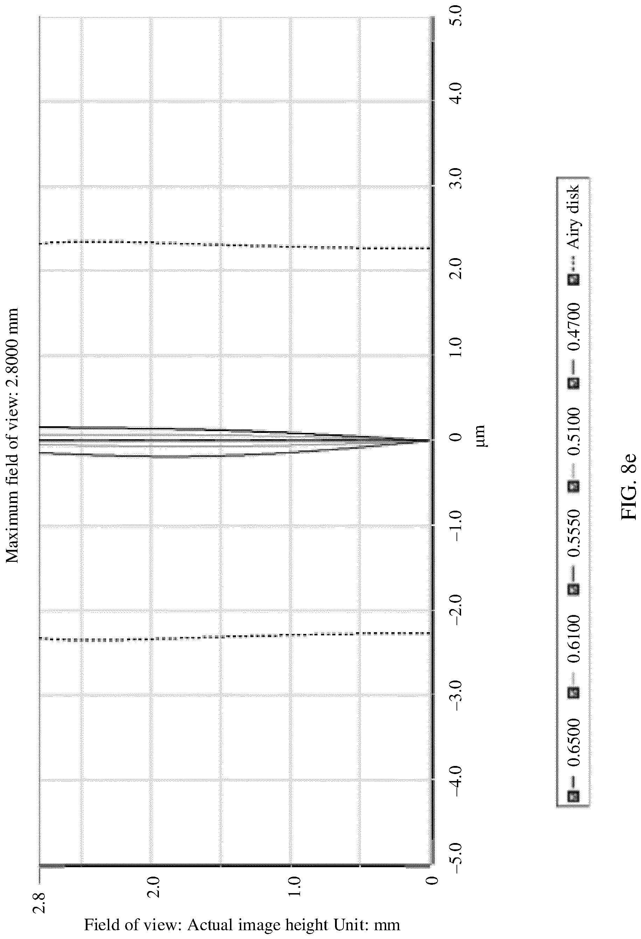

FIG. 8e is a longitudinal chromatic aberration curve of the optical system according to Embodiment 7, where a horizontal axis is an image height change and a vertical axis is a field of view. The longitudinal chromatic aberration curve represents longitudinal chromatic aberrations corresponding to five rays of light having different wavelengths at different fields of view.

It can be learned from FIG. 8b to FIG. 8e that the optical system provided in Embodiment 7 can achieve good imaging quality.

With reference to the foregoing specific embodiments, according to the optical lens assembly provided in this application, a focal power, a material, and a surface shape (a concave surface or a convex surface) of each lens are defined, and a dispersion coefficient, a temperature drift coefficient, a coefficient of a relative refractive index to a temperature drift, and a range of a curvature radius of each surface of a lens and a spacing between adjacent lenses are combined, so that a problem of a temperature drift effect is resolved, and an imaging effect is improved, thereby facilitating correction of a comprehensive aberration of the optical lens assembly. In this way, a longitudinal chromatic aberration of the optical lens assembly provided in this application is less than 1.5 μm, an axial chromatic aberration thereof is less than 10 μm, and a distortion thereof is less than 1%.

In this application, the material of the at least one of the lenses in the optical lens assembly is selected as the first material whose coefficient of a relative refractive index to a temperature drift is less than the coefficient of the relative refractive index to the temperature drift of the plastic material, so that an optical effect of the optical lens assembly can be suppressed. Therefore, parameters such as a focal length and an MTF (Modulation Transfer Function (modulation transfer function)) of the optical lens assembly are insensitive to temperature, and a stroke margin used by a voice coil motor to compensate for a temperature drift effect of the lens assembly is reduced or a temperature drift effect compensation algorithm of a photographing system is canceled, thereby improving user experience and implementing excellent optical quality.

**Claims**

1. An optical lens assembly, comprising a plurality of lenses successively arranged from an object side to an image side in a direction along an optical axis, wherein at least one of the plurality of lenses is made of a first material, and a coefficient of a relative refractive index to a temperature drift of the first material is less than a coefficient of a relative refractive index to a temperature drift of a plastic material; and the first three lenses in the plurality of lenses in a direction from the object side to the image side are successively a first lens, a second lens, and a third lens, the first lens has a positive focal power, the second lens has a negative focal power, the third lens has a negative focal power, an effective focal length of the optical lens assembly is f, a distance from an object side surface of the first lens to an imaging plane on the optical axis is TTL, and TTL/f $\leq$ 1.

2. The optical lens assembly according to claim 1, wherein the coefficient of the relative refractive index to the temperature drift of the first material is β, and -9$\times$10$^{-5}$ $\leq$ 0 $\leq$ 9$\times$10$^{-5}$.

3. The optical lens assembly according to claim 2, wherein the coefficient of the relative refractive index to the temperature drift of the first material is β, and -9$\times$10$^{-5}$ $\leq$ β $\leq$ 0.

4. The optical lens assembly according to claim 3, wherein the first material is a glass material.

5. The optical lens assembly according to claim 2, wherein a temperature drift coefficient of the optical lens assembly is Δf/Δ°C, and -2.6 μm/°C $\leq$ Δf/Δ°C $\leq$ 2.6 μm/°C.

6. The optical lens assembly according to claim 5, wherein -1 μm/°C $\leq$ Δf/Δ°C $\leq$ 1 μm/°C.

7. The optical lens assembly according to claim 1, wherein a curvature radius of an object side surface of the second lens is R21, a curvature radius of an image side surface of the second lens is R22, and |f/R21| + |f/R22| < 10.

8. The optical lens assembly according to claim 1, wherein the plurality of lenses are six lenses: the first lens, the second lens, the third lens, a fourth lens, a fifth lens, and a sixth lens successively arranged in a direction from the object side to the image side, the optical lens assembly further comprises a vignetting stop, and the vignetting stop is disposed on an object side of the first lens and/or disposed on an image side of the sixth lens.

9. The optical lens assembly according to claim 1, wherein the plurality of lenses are six lenses: the first lens, the second lens, the third lens, a fourth lens, a fifth lens, and a sixth lens successively arranged in a direction from the object side to the image side, the fourth lens is made of the first material, and at least one surface of the fourth lens is a spherical surface.

10. The optical lens assembly according to claim 9, wherein a spherical radius of the spherical surface of the fourth lens is R, and -100 mm < R < 100 mm.

11. The optical lens assembly according to claim 9, wherein a spacing between the fourth lens and the fifth lens is SP4, a spacing between an object-side vertex position of the first lens and an image-side vertex position of the sixth lens is LT, and SP4/LT $\leq$ 0.5.

12. The optical lens assembly according to claim 9, wherein a focal length of the fourth lens is f4, and $0.1 \leq f4/f \leq 5$.

13. The optical lens assembly according to claim 1, wherein the plurality of lenses are six lenses: the first lens, the second lens, the third lens, a fourth lens, a fifth lens, and a sixth lens successively arranged in a direction from the object side to the image side, the fifth lens is made of the first material, and at least one surface of the fifth lens is a spherical surface.

14. The optical lens assembly according to claim 13, wherein a combined focal length of the fourth lens and the fifth lens is f45, and $0.27 \leq f45/f \leq 0.9$.

15. The optical lens assembly according to claim 13, wherein a spacing between the fifth lens and the sixth lens is SP5, a spacing between an object-side vertex position of the first lens and an image-side vertex position of the sixth lens is LT, and SP5/LT $\leq$ 0.2.

16. The optical lens assembly according to claim 1, wherein the plurality of lenses are six lenses: the first lens, the second lens, the third lens, a fourth lens, a fifth lens, and a sixth lens successively arranged in a direction from the object side to the image side, the sixth lens is made of the first material, and at least one surface of the sixth lens is a spherical surface.

17. The optical lens assembly according to claim 16, wherein a combined focal length of the first lens and the second lens is f12, and $0.27 \leq f12/f \leq 0.9$.

18. The optical lens assembly according to claim 16, wherein a spacing between the third lens and the fourth lens is SP3, a spacing between an object-side vertex position of the first lens and an image-side vertex position of the sixth lens is LT, and SP3/LT $\leq$ 0.2.

19. The optical lens assembly according to claim 1, wherein the first lens is made of the first material, and at least one surface of the first lens is a spherical surface.

20. The optical lens assembly according to claim 19, wherein a combined focal length of the first lens and the second lens is f12, and $0.27 \leq fl2/f \leq 0.9$.

21. The optical lens assembly according to claim 19, wherein a spacing between the second lens and the third lens is SP2, a spacing between an object-side vertex position of the first lens and an image-side vertex position of the sixth lens is LT, and SP2/LT $\leq$ 0.2.

22. The optical lens assembly according to claim 1, wherein the object side surface of the first lens near the optical axis is a convex surface.

23. A camera, comprising a lens barrel and the optical lens assembly according to any one of claims 1 to 22, wherein the optical lens assembly is mounted in the lens barrel.

**24.** A terminal device, comprising the camera according to claim 23.

FIG. 1

FIG. 2a

FIG. 2b

FIG. 2c

FIG. 2d

Maximum field of view: 2.8000 mm

FIG. 2e

FIG. 3a

FIG. 3b

FIG. 3c

FIG. 3d

FIG. 3e

FIG. 4a

FIG. 4b

FIG. 4c

FIG. 4d

Z=−4.494, field of view=2.282    Maximum field of view: 2.8000 mm

FIG. 4e

FIG. 5a

Pupil radius: 2.1230 mm

FIG. 5b

FIG. 5c

FIG. 5d

FIG. 5e

STO  L1   L2    L3    L4    L5    L6    IRCF

S1  S2  S3  S4  S5  S6  S7  S8  S9  S10  S11  S12  S13  S14  S15

FIG. 6a

FIG. 6b

FIG. 6c

Data=0.1051, field of view=5.008

FIG. 6d

Maximum field of view: 2.8000 mm

FIG. 6e

FIG. 7a

Pupil radius: 2.1249 mm

FIG. 7b

EP 3 964 875 A1

FIG. 7c

FIG. 7d

Maximum field of view: 2.8000 mm

FIG. 7e

FIG. 8a

FIG. 8b

FIG. 8c

FIG. 8d

Maximum field of view: 2.8000 mm

FIG. 8e

## INTERNATIONAL SEARCH REPORT

International application No.

**PCT/CN2020/098175**

| A. | CLASSIFICATION OF SUBJECT MATTER |
|---|---|

G02B 13/00(2006.01)i; G02B 9/62(2006.01)i

According to International Patent Classification (IPC) or to both national classification and IPC

| B. | FIELDS SEARCHED |
|---|---|

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

VEN; CNABS; CNTXT; CNKI; USTXT: 第六, 第6, 透镜, 镜头, 正, 负, TTL, TL, f, 折射率, 温度, 系数, 温漂, 漂移, 玻璃, 球面, sixth, 6th, lens??, positive, negative, refractive, temperature, coefficient, ratio, shift+, glass+, spher+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 110456487 A (ZHEJIANG SUNNY OPTICS CO., LTD.) 15 November 2019 (2019-11-15) description paragraph 3, paragraphs 49-50, paragraphs 67-94, figures 3-8C | 1-7, 19-24 |
| X | CN 109696739 A (SAMSUNG ELECTRO-MECHANICS CO., LTD.) 30 April 2019 (2019-04-30) description paragraphs 3-79, paragraphs 103-113, figures 5-10 | 1-24 |
| X | CN 109521548 A (LARGAN PRECISION CO., LTD.) 26 March 2019 (2019-03-26) description paragraphs 144-154, paragraphs 192-224, figures 3-6 | 1-24 |
| X | CN 108873271 A (NANCHANG OUFEI PREC OPTICAL PRODUCT CO., LTD.) 23 November 2018 (2018-11-23) description paragraphs 3-28, paragraphs 103-114, figures 9-12 | 1-7, 19-24 |
| A | CN 108627955 A (ZHEJIANG SUNNY OPTICAL CO., LTD.) 09 October 2018 (2018-10-09) entire document | 1-24 |
| A | US 2016161713 A1 (LARGAN PRECISION CO., LTD.) 09 June 2016 (2016-06-09) entire document | 1-24 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 September 2020** | **28 September 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

International application No.

**PCT/CN2020/098175**

| Patent document cited in search report | | | Publication date (day/month/year) | Patent family member(s) | | | Publication date (day/month/year) |
|---|---|---|---|---|---|---|---|
| CN | 110456487 | A | 15 November 2019 | CN | 211086753 | U | 24 July 2020 |
| CN | 109696739 | A | 30 April 2019 | CN | 208937800 | U | 04 June 2019 |
| | | | | KR | 101946262 | B1 | 11 February 2019 |
| | | | | US | 2019121061 | A1 | 25 April 2019 |
| CN | 109521548 | A | 26 March 2019 | TW | I617834 | B | 11 March 2018 |
| | | | | US | 2019086642 | A1 | 21 March 2019 |
| | | | | US | 2020018934 | A1 | 16 January 2020 |
| | | | | TW | 201915540 | A | 16 April 2019 |
| | | | | US | 10466444 | B2 | 05 November 2019 |
| | | | | IN | 201824025371 | A | 22 March 2019 |
| CN | 108873271 | A | 23 November 2018 | CN | 208432785 | U | 25 January 2019 |
| CN | 108627955 | A | 09 October 2018 | CN | 109799599 | A | 24 May 2019 |
| | | | | CN | 109739012 | A | 10 May 2019 |
| | | | | CN | 109799598 | A | 24 May 2019 |
| | | | | WO | 2019218628 | A1 | 21 November 2019 |
| | | | | CN | 109765680 | A | 17 May 2019 |
| | | | | US | 20200257091 | A1 | 13 August 2020 |
| | | | | CN | 208367314 | U | 11 January 2019 |
| US | 2016161713 | A1 | 09 June 2016 | TW | I519809 | B | 01 February 2016 |
| | | | | TW | 201621379 | A | 16 June 2016 |
| | | | | US | 9557532 | B2 | 31 January 2017 |
| | | | | IN | 201501233 | I2 | 05 August 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910572891

- CN 201910940154